# EUROPÄISCHE PATENTSCHRIFT

(11) **EP 0 613 429 B1**
(45) Veröffentlichungstag und Bekanntmachung des Hinweises auf die Patenterteilung: **24.07.1996**
(21) Anmeldenummer: 93918941.1
(22) Anmeldetag: 04.09.1993
(51) Int. Cl.: B60T 8/48, B60T 8/24, B60T 7/12

(54) **HYDRAULISCHE FAHRZEUGBREMSANLAGE MIT BLOCKIERSCHUTZEINRICHTUNG**
HYDRAULIC VEHICLE BRAKING SYSTEM WITH AN ANTILOCK SYSTEM
SYSTEME HYDRAULIQUE DE FREINAGE A DISPOSITIF ANTIBLOCAGE POUR VEHICULES

(30) Priorität: 26.09.1992 DE 4232311
(43) Veröffentlichungstag der Anmeldung: 07.09.1994
(73) Patentinhaber: ROBERT BOSCH GMBH, 70442 Stuttgart (DE); MERCEDES-BENZ AG, 70322 Stuttgart (DE)
(72) Erfinder: RESCH, Reinhard, D-70378 Stuttgart (DE); VAN ZANTEN, Anton, D-71254 Ditzingen-Schoeckingen (DE); LAUER, Rainer, D-70825 Münchingen (DE); ALTMANN, Rainer, D-74931 Erligheim (DE); BINDER, Juergen, D-71701 Schwieberdingen (DE); MEYER, Michael-Raymond, D-71636 Ludwigsburg (DE)
(74) Vertreter: Voss, Klaus, Dipl.-Ing.
(86) Internationale Anmeldenummer: DE9300802
(87) Internationale Veröffentlichungsnummer: WO9407720

(56) Entgegenhaltungen:
- EP-A- 0 460 408
- EP-A- 0 482 367
- WO-A-90/11918
- DE-A- 4 016 561
- DE-A- 4 035 527
- FR-A- 2 509 243
- FR-A- 2 662 129
- GB-A- 2 248 897

## Beschreibung

### Stand der Technik

Die Erfindung geht aus von einer hydraulischen Bremsanlage nach der Gattung des Hauptanspruchs.

Durch die US-Patentschrift 4 809 183 ist eine hydraulische Fahrzeugbremsanlage mit einer Blockierschutzeinrichtung und einem Steuergerät bekannt. Des weiteren sind der Blockierschutzeinrichtung eine hydraulische Druckquelle und wenigstens eine Auswerteschaltung zugeordnet zum Erkennen von Übersteuerungstendenz, Untersteuerungstendenz sowie beginnender Schleudergefahr und zum Erzeugen von Steuersignalen für die Blockierschutzeinrichtung, so daß diese unter Benutzung der hydraulischen Druckquelle das Fahrzeug automatisch bremst, wobei fallweise die Räder einer Fahrzeugachse oder aller Fahrzeugachsen gebremst werden. Das automatische Bremsen stabilisiert das Fahrzeug, wirkt also einer Übersteuerungstendenz oder Untersteuerungstendenz oder einer Schleudergefahr oder einem bereits eingetretenen Schleudern entgegen. Die Druckquelle ist nicht dargestellt. Zur Gewinnung der Steuersignale werden beispielsweise Schräglaufwinkel gemessen und mit vorgewählten Schwellenwerten verglichen. Beispielsweise kann auch mittels eines Gyroskopes die Drehgeschwindigkeit des Fahrzeugs um die Hochachse beobachtet werden. Alternativ können auch Querbeschleunigungen mittels den Achsen zugeordneter Beschleunigungssensoren gemessen und ausgewertet werden.

Durch die Druckchrift WO 90/02064 ist es bekannt, eine Blockierschutzvorrichtung mit 3/3-Ventilen für den Blockierschutzbetrieb zu benützen und im Fall eines notwendig werdenden Stabilisierens des Fahrzeugs zwecks Kompensierens von Schleudern oder Schleudergefahr die Vorderradbremsen von einem Hauptbremszylinder zu trennen und unter Verwendung einer Druckquelle und der den Vorderrädern zugeordneten 3/3-Ventile die Vorderräder automatisch stark zu bremsen, insbesondere zu blockieren. Die Druckschrift gibt drei Lösungswege an zum Gewinnen von Steuersignalen für den Fall des Stabilisierens, um die 3/3-Ventile in Bremsdruckaufbaustellungen zu steuern, so daß den Vorderradbremsen starker Bremsdruck oder gar Blockierdruck zugeführt wird. Die Druckquelle ist nicht dargestellt. Ebenfalls nicht dargestellt sind Mittel, die im Stabilisierungsbetrieb einen ungewollten Abfluß von Druckmittel zum Hauptbremszylinder verhindern.

Die die Merkmale des Oberbegriffes beinhaltende Druckschrift DE 41 09 925 A1 offenbart eine hydraulische Bremsanlage mit vorteilhaften geschlossenen Bremskreisen und mit einer nach dem sogenannten Rückförderprinzip arbeitenden Blockierschutzeinrichtung und zur Steuerung des Kurvenfahrverhaltens eines Fahrzeugs zwischen dieser Blockierschutzeinrichtung und einem Hauptbremszylinder je Bremskreis eingebaut eine Kombination aus einem steuerbaren 2/2-Ventil und einem Zylinder mit einem Trennkolben und einer Trennkolbenrückstellfeder sowie für beide Bremskreise eine gemeinsame Hilfspumpe und ein dieser nachgeordnetes 3/2-Wegeventil zum gesteuerten Beaufschlagen der Trennkolben und zum Steuern der 2/2-Ventile, die durch Steuereingänge hindurch hydraulisch steuerbar sind zum Verschließen von Bremsleitungen zwischen den Zylindern und dem Hauptbremszylinder. Nach dem Absperren der Hauptbremsleitungen in den Zylindern erzeugte Drücke werden mittels der Blockierschutzeinrichtung moduliert und individuell den Radbremsen der vier Räder zugeführt. Die Blockierschutzeinrichtung kann auch individuell die den Radbremsen zugeführten Drücke reduzieren. Ein Steuergerät, das zur Verbesserung des Kurvenfahrverhaltens des damit ausgerüsteten Kraftfahrzeugs sowohl das 3/2-Ventil als auch die Blockierschutzeinrichtung steuert, kann auch einen Antriebsmotor für die Hilfspumpe einschalten. Nachteilig ist, daß aufgrund der hydraulischen Verschaltung der Zylinder mit Modulationsventilanordnungen der Blockierschutzeinrichtung die Hilfspumpe einen Druck liefern muß in Höhe des zu erwartenden höchsten Bremsdrucks während einer Kurvenfahrt. Dementsprechend ist die Hilfspumpe kräftig auszubilden und ein notwendiger Antriebsmotor ist schwer und belastet ein elektrisches Bordnetz des Fahrzeugs in nachteiliger Weise. Der schwere Antriebsmotor und die schwere Hilfspumpe sind teuer. Ein weiterer Nachteil ist, daß während des Pumpbetriebs infolge des hohen erzeugten Drucks störende und gegebenenfalls sehr lästige Geräusche entstehen. Weiterhin teuer ist ein von der Hilfspumpe ladbarer Speicher sowie das elektrisch steuerbare 3/2-Wegeventil, das die Beaufschlagung der Trennkolben und der hydraulischen Steuereingänge der 2/2-Ventile steuert. Des weiteren sind infolge der Ausbildung des Zylinders und seines Trennkolbens das jeweilige 2/2-Wegeventil mit einer Rückschlagventilfunktion zu kombinieren, damit man während eines automatisch ablaufenden Bremsbetriebs allein durch Bremspedalbetätigung sofort in einen normalen Bremsbetrieb übergehen kann. Im offenbarten Ausführungsbeispiel ist deshalb der zweiten Stellung des 2/2-Wegeventils das Symbol eines Rückschlagventils zugeordnet. Prinzipiell könnte man an dieser Stelle gemäß dem Stand der Technik auch ein normales 2/2-Wegeventil verwenden und im Bypass dazu ein normales Rückschlagventil anordnen, das sich mit Überdruck aus dem Hauptbremszylinder in Richtung der Radbremsen öffnen läßt.

Eine durch die GB-A-2 248 897 (Figur 9) bekannte hydraulische Zweikreisbremsanlage mit einem zweikreisigen Hauptbremszylinder, mit einem Reservoir für den Hauptbremszylinder, mit einer Blockierschutzeinrichtung, die Radbremsen zugeordnete Bremsdruckmodulationsventilanordnungen und je Bremskreis eine selbstansaugende Rückförderpumpe aufweist, ist zur Durchführung von Antriebsschlupfregelbetrieb weitergebildet durch den Eingängen der Rückförderpumpen vorgeordnete elektrisch steuerbare 2/2-Wegeventile und durch sich selbst füllende Speicher, die mittels Federn verschiebbare Speicherkolben aufweisen, durch Zylinder, in denen sich Trennkolben und von diesen gesteuerte 2/2-Wegeventile befinden, durch eine sich aus dem Reservoir versorgende Hilfspumpe, die beispielsweise 15 bar Druck liefert zum Verschieben der Trennkolben zwecks schnellen Füllens der Radbremsen und damit beschleunigtem Anlegen von Bremsbelägen im Antriebsschlupfregelbetrieb, durch ein von der Hilfspumpe zu den Trennkolben öffenbares Rückschlagventil und durch ein zwischen dem Rückschlagventil und den Zylindern angeschlossenes Druckbegrenzungsventil zur Begrenzung des Drucks der Rückförderpumpen. Nachteilig ist der technische Aufwand und das Gewicht für die Speicher. Nachteilig ist auch, daß die selbstansaugenden Rückförderpumpen ausreichend Unterdruck erzeugen müssen zur Überwindung von Reibung der Speicherkolben in den Speichern und zur Überwindung von Kräften der Federn. Dies kann gegebenenfalls zu mangelhafter Füllung der Rückförderpumpen und dadurch nachteilig langsamen Bremsdruckanstiegen im Antriebsschlupfregelbetrieb führen. Sobald Bremsbeläge angelegt sind, steigern die Rückförderpumpen Bremsdrücke über die genannten 15 bar der Hilfspumpe und schließen dabei das ausgangsseitig der Hilfspumpe angeordne te Rückschlagventil mit der Folge, daß danach die Hilfspumpe keinen Beitrag mehr für den Antriebsschlupfregelbetrieb leistet und beispielsweise ausgeschaltet wird.

Durch die Druckschrift EP 0 482 367 A1 ist eine hydraulische Fahrzeugbremsanlage bekannt mit einer Blockierschutz- und Antriebsschlupfregeleinrichtung. Die Blockierschutzeinrichtung arbeitet nach dem bekannten Rückförderprinzip mit einer Rückförderpumpe je Bremskreis. Die Radbremsen von antreibbaren Rädern sind einem der beiden Bremskreise zugeordnet. Zu diesem Bremskreis gehört eine leckagefreie Hilfspumpe, die zur Durchführung von Antriebsschlupfregelbetrieb einen Eingang der Rückförderpumpe mit niedrigem Druck versorgt. Der niedrige Druck wird eingestellt mittels eines der Hilfspumpe zugeordneten Hilfsdruckbegrenzungsventils. Um das Hilfsdruckbegrenzungsventil führt ein Bypass, in den eine Drossel eingebaut ist. Dieser Drossel nachgeordnet ist ein zum Eingang der Rückförderpumpe öffenbares Rückschlagventil, das eine Entleerung des Bremskreises durch die Drossel hindurch verhindern soll. Mangelhafte Dichtheit des Rückschlagventils infolge von Korrosion oder Verschmutzung ist im normalen Bremsbetrieb nicht erkennbar, wirkt sich aber schlagartig im Blockierschutzbetrieb nachteilig aus.

Durch die Druckschrift DE 40 39 661 A1 ist es bekannt, in einer ebenfalls mit wenigstens einer Rückförderpumpe ausgerüsteten Blockierschutz- und Antriebsschlupfregeleinrichtung für den Antriebsschlupfregelbetrieb den Eingang der Rückförderpumpe durch ein elektrisch öffenbares 2/2-Wegeventil aus einem Speicher zu versorgen. Der Speicher besteht im wesentlichen aus einem Zylinder, einem in diesem verschiebbaren Kolben sowie einer Kolbenantriebsfeder, die den Hilfsdruck erzeugt, mit dem die Rückförderpumpe versorgbar ist, so daß der Bremskreis auch im Antriebsschlupfregelbetrieb geschlossen bleibt. Des weiteren ist ein elektrischer Antrieb vorgesehen, der den Kolben gegen die Kraft der Kolbenantriebsfeder in eine Ausgangsstellung zieht. Des weiteren ist ein elektrischer Schalter zum Ausschalten des elektrischen Antriebs notwendig, sobald der Kolben seine Ausgangsstellung erreicht. Des weiteren ist eine entsperrbare Verriegelung notwendig, die den Kolben in seiner Ausgangsstellung festhält und erst dann freigibt, wenn Antriebsschlupfregelbetrieb beginnt. Erkennbar sind diese Mittel zur Erzeugung eines die Rückförderpumpe ladenden Hilfsdrucks insgesamt teuer. Außerdem müssen die elektrisch arbeitenden Mittel samt den zugehörigen Schaltern von einer besonders ausgebildeten elektronischen Überwachungseinrichtung auf Funktionstüchtigkeit überwacht werden. Ein weiterer Nachteil besteht darin, daß bei Undichtheit eines in eine Hauptbremsleitung eingebauten 2/2-Wegeventils während eines Antriebsschlupfregelbetriebs Druckmittel zum Hauptbremszylinder abfließen kann mit der Folge, daß ein benötigter Bremsdruck für den Antriebsschlupfregelbetrieb verloren geht, wobei sich der das Druckmittel liefernde Zylinder erschöpft. Letzteres hat, wenn per Bremspedalbetätigung eine Normalbremsung eine Antriebsschlupfregelungsbremsung abzulösen hat, noch den Nachteil, daß Druckmittel aus dem Hauptbremszylinder in den Zylinder abfließt und deshalb den Radbremsen nicht zur Verfügung steht. Hiervon wird der Fahrer womöglich in einem abzubrechenden Überholvorgang überrascht.

Durch die DE-OS 40 35 527 ist noch eine zweikreisige hydraulische Fahrzeugbremsanlage bekannt mit einem ein Reservoir aufweisenden Hauptbremszylinder, mit Radbremsen für antreibbare und nicht antreibbare Räder und einer dazwischen angeordneten Blockierschutz- und Antriebsschlupfregeleinrichtung, die zwei Rückförderpumpen aufweist. Ein Eingang derjenigen Rückförderpumpe, die Radbremsen von antreibbaren Rädern zugeordnet ist, ist durch ein normalerweise geschlossenes und elektrisch öffenbares 2/2-Wegeventil aus dem Reservoir des Hauptbremszylinders für den Antriebsschlupfregelbetrieb versorgbar. Eine Besonderheit besteht darin, daß dieses 2/2-Wegeventil nur geöffnet wird, solange in wenigstens einer Radbremse eines antreibbaren Rades der Bremsdruck im Antriebsschlupfregelbetrieb zu erhöhen ist. Dies hat den Vorteil, daß die hier selbstansaugend ausgebildete Rückförderpumpe aus dem Reservoir nur zum Bremsdruckerhöhen Druckmittel erhält. Während solcher Zeitspannen, in denen Bremsdrücke konstant gehalten werden, erhält die Rückförderpumpe kein Druckmittel aus dem Reservoir und kann deshalb kein Druckmittel durch ein auf einen hohen Öffnungsdruck einzustellendes Sicherheitsventil drücken. Während solcher Zeitspannen wird also Antriebsenergie eingespart und die Geräuschentwicklung niedrig gehalten. Nachteilig ist allerdings, daß die Rückförderpumpe dann, wenn das Reservoir nicht ausreichend voll ist und in ihm das Druckmittel schlingert, Luft ansaugen und in den Bremskreis drücken kann mit der Folge von gegebenenfalls wenigstens teilweisem Ausfall von Bremskraft.

### Vorteile der Erfindung

Die erfindungsgemäße hydraulische Fahrzeugbremsanlage mit den kennzeichnenden Merkmalen des Anspruchs 1 hat den Vorteil, daß die Hilfspumpe über den Trennkolben lediglich den Druck zum Füllen der jeweiligen Rückförderpumpe durch deren Eingang hindurch zu liefern braucht. Erkennbar ist dieser Druck wesentlich geringer als ein mittlerer oder gar voller Bremsdruck, den man beispielsweise zum Überbremsen oder gar Blockieren von Vorderrädern gemäß dem Vorschlag in der WO-A-90/02064 benötigt. Wenn das automatische Bremsen zur Verbesserung des Fahrverhaltens oder zur Antriebsschlupfregulierung beispielsweise auf nassgeregneten Glatteis erfolgen soll, so benötigt man ebenfalls nur den Druck zum Füllen der Rückförderpumpe, und diese Rückförderpumpe erzeugt schließlich diejenigen wesentlich höheren Drücke, aus denen Bremsdrücke zur Bremsung und zur Kompensation von Antriebsmomentüberschuß gewonnen werden. Weil diese von der Hilfspumpe zu liefernden Drücke erkennbar niedrig sind, wird wenig Antriebsleistung benötigt. Der Antriebsmotor kann dementsprechend leichter ausgebildet werden. Die Kombination aus Hilfspumpe und Antriebsmotor verursacht wesentlich weniger Geräusch als die mit Hochdruck arbeitende Hilfspumpe des Standes der Technik.

Durch die in den Unteransprüchen aufgeführten Maßnahmen sind vorteilhafte Weiterbildungen und Verbesserungen der im Hauptanspruch angegegebenen hydraulischen Kraftfahrzeugbremsanlage möglich.

Die kennzeichnenden Merkmale des Anspruchs 2 haben den Vorteil, daß die Hilfspumpe tatsächlich nur den relativ niedrigen Versorgungsdruck zum Füllen der Rückförderpumpen zu liefern braucht. Dadurch wird die Entwicklung von Pumpgeräusch wirksam begrenzt. Die kennzeichnenden Merkmale des Anspruchs 3 haben den Vorteil, daß ohne Verwendung eines 3/2-Wegeventils des Standes der Technik nach dem Abschalten der Hilfspumpe eine Rückkehr des jeweiligen Trennkolbens in seine Ausgangslage sichergestellt ist. Zwar wird der Drosselquerschnitt während der Arbeit der Hilfspumpe durchströmt, weil aber, wie bereits erwähnt lediglich ein geringer Druck aufzubauen ist, verursacht der Drosselquerschnitt nur unerhebliche Mehrarbeit der Hilfspumpe. Die kennzeichnenden Merkmale des Anspruchs 4 geben ein praktisches Ausführungsbeispiel an, das dann besonders vorteilhaft ist, wenn die Hilfspumpe als eine Kolbenpumpe ausgebildet ist und deshalb praktisch keine Drosselquerschnitte wie sonst Zahnradpumpen oder Flügelzellenpumpen aufweist.

Die kennzeichnenden Merkmale des Anspruchs 5 haben den Vorteil, daß in raumsparender und arbeitsparender Weise das jeweilige 2/2-Wegeventil untergebracht ist. Zumindest aber wird eine Dichtung, die man sonst für einen separaten Steuerkolben benötigt und die Anlaß zu Druckmittelverlust sein kann, eingespart. Ein weiterer Vorteil besteht darin, daß das 2/2-Wegeventil bei einem ersten Teilhub des Trennkolbens sicher verschlossen wird, so daß der überwiegende Teil des zur Verfügung stehenden Hubes des Trennkolbens tatsächlich zur Druckmittelversorgung der Rückförderpumpe zur Verfügung steht.

Die kennzeichnenden Merkmale des Anspruchs 6 ergeben den Vorteil, daß auch dann, wenn während eines automatischen Bremsbetriebs die Hilfspumpe nicht nur Druckmittel sondern auch Luftblasen aus dem Reservoir ansaugt, solche Luftblasen auch bei defekter Trennkolbendichtung am Eintritt in den jeweiligen Bremskreis gehindert werden. Denn für die Luftblasen ist es leichter, zwischen den beiden Dichtungen des Trennkolbens nach oben in Richtung Atmosphärendruck zu entweichen, als gegen Überdruck im Bremskreis in diesen einzudringen. Die kennzeichnenden Merkmale des Anspruchs 7 ergeben den Vorteil, daß der Trennkolben und auch der Zylinder im Bereich zwischen den beiden Dichtringen mittels des Druckmittels vor Korossion geschützt wird. Die kennzeichnenden Merkmale des Anspruchs 8 ergeben ein insgesamt preisgünstiges Ausführungsbeispiel anläßlich der Integration des 2/2-Wegeventils in den Zylinder. Hier ergibt sich auch noch der zusätzliche Vorteil, daß bei einer entsprechend weich gestalteten Schließfeder und einer geeigneten Vorspannung beim Einbau derselben sich die Wirkung eines Rückschlagventils ergibt wobei dieses Rückschlagventil mittels Überdrucks aus dem Hauptbremszylinder gegen den Hilfsdruck öffenbar ist. Ab dem Öffnen des die Funktion eines Rückschlagventils übernehmenden 2/2-Wegeventils wird wegen Überwindung des Öffnungsdrucks des Druckbegrenzungsventils der Hilfspumpe der Trennkolben zu seiner Ausgangsstellung verschoben. Der Unterschied zwischen einer normalen Bremsung per Bremspedal und dem Einbremsen in eine automatische Bremsung besteht im wesentlichen darin, daß im letzteren Fall unmittelbar nach der Bremspedalbetätigung bereits ein Bremspedalwiderstand spürbar ist, weil während des automatischen Bremsbetriebs der Bremskreis bereits unter Druck steht. Die kennzeichnenden Merkmale des Anspruchs 9 ergeben den Vorteil, daß beim Einbremsen in eine automatische Bremsung Druckmittel aus dem Hauptbremszylinder in die Sekundärkammer gelangen kann.

Die Fahrzeugbremsanlage mit den kennzeichnenden Merkmalen des Anspruchs 10 hat den Vorteil, daß einerseits zum automatischen Bremsbetrieb durch Verschieben des Trennkolbens das 2/2-Wegeventil verschließbar ist und dann, wenn während eines automatischen Bremsbetriebs eine normale Bremsung eingeleitet wird, sofort der Hilfsdruck spürbar wird. Sobald bei Überwindung des Hilfsdrucks der Bremsdruck den Trennkolben in seine Ausgangsstellung zurückbewegt hat, ist am Bremspedal im wesentlichen der gewohnte Zusammenhang zwischen Bremspedalweg und dabei ansteigendem Bremspedalwiderstand fühlbar. Insoweit ist die hydraulische Fahrzeugbremsanlage angenehm bedienbar. Die kennzeichnenden Merkmale des Anspruchs 10 haben des weiteren den Vorteil, daß mangelnde Dichtheit des 2/2-Wegeventils oder einer der beiden Dichtringe des Schwimmkolbens oder eines den Sekundärraum abdichtenden Trennkolbenabdichtrings durch Absinken des Bremspedals bei dessen Betätigung fühlbar ist. Eine Fehleranzeige für die dem automatischen Bremsen dienende zusätzliche Einrichtung erfolgt also in derjenigen Weise, wie sie auch für den allgemein bekannten Hauptbremszylinder vor sich geht.

Die kennzeichnenden Merkmale des Anspruchs 11 haben den Vorteil, daß die Rückförderpumpe gegebenenfalls störendes Pumpgeräusch nur während automatischen Bremsdruckabsenkungen und während Bremsdruckwiederanstiegen erzeugt. Dazwischen verursacht die Rückförderpumpe nur Leerlaufgeräusch und benötigt weniger Antriebsenergie. Die kennzeichnenden Merkmale des Anspruchs 12 sind zusätzlich oder alternativ anwendbar und haben den Vorteil, daß während eines automatischen Bremsbetriebs die Rückförderpumpe nur dann Pumparbeit zu leisten braucht, wenn Druckmittel in deren Einlaß einströmt.

### Zeichnung

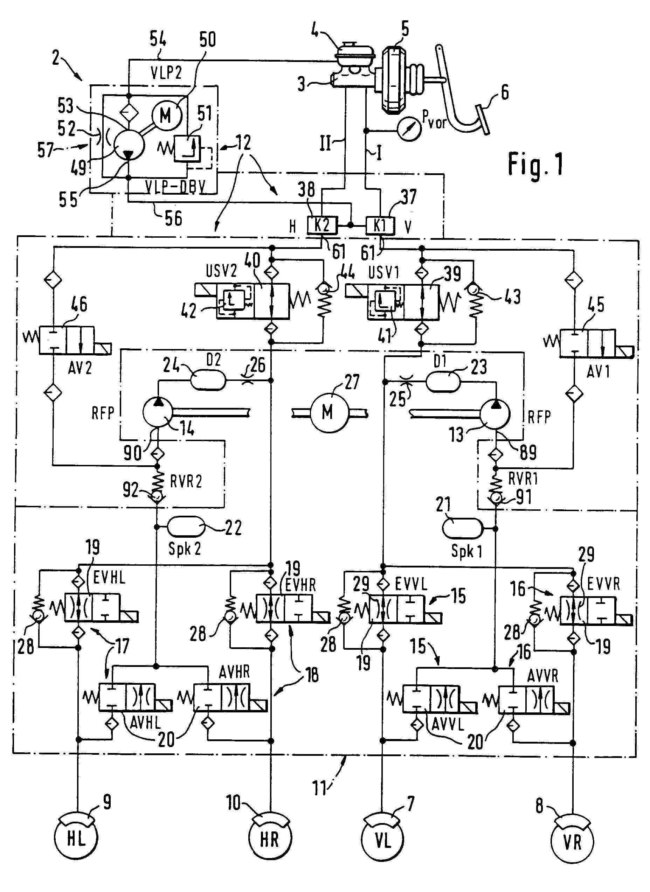

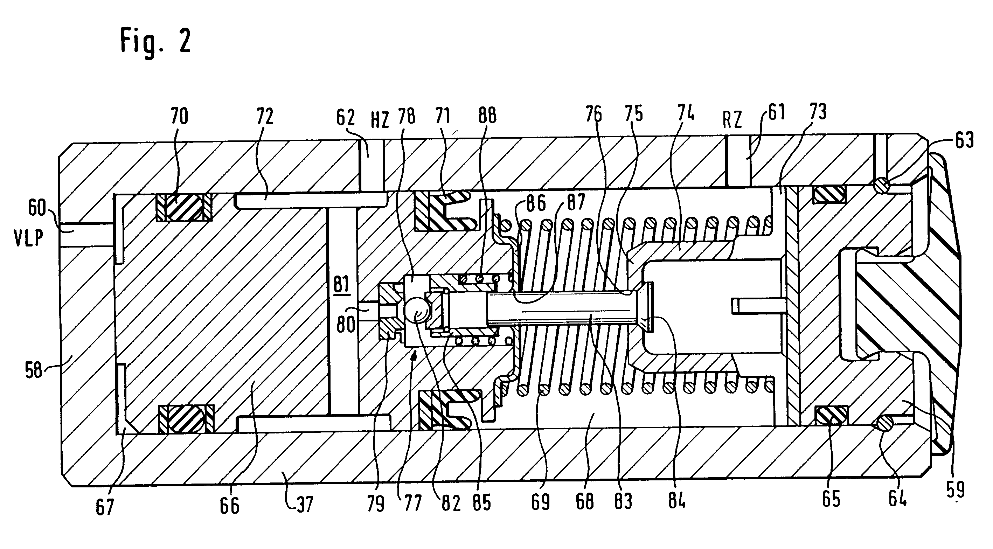

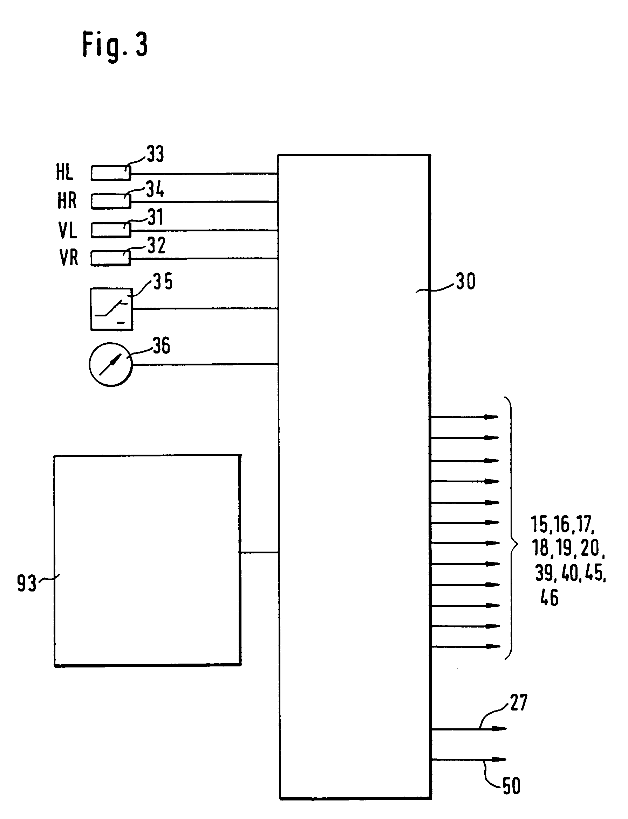

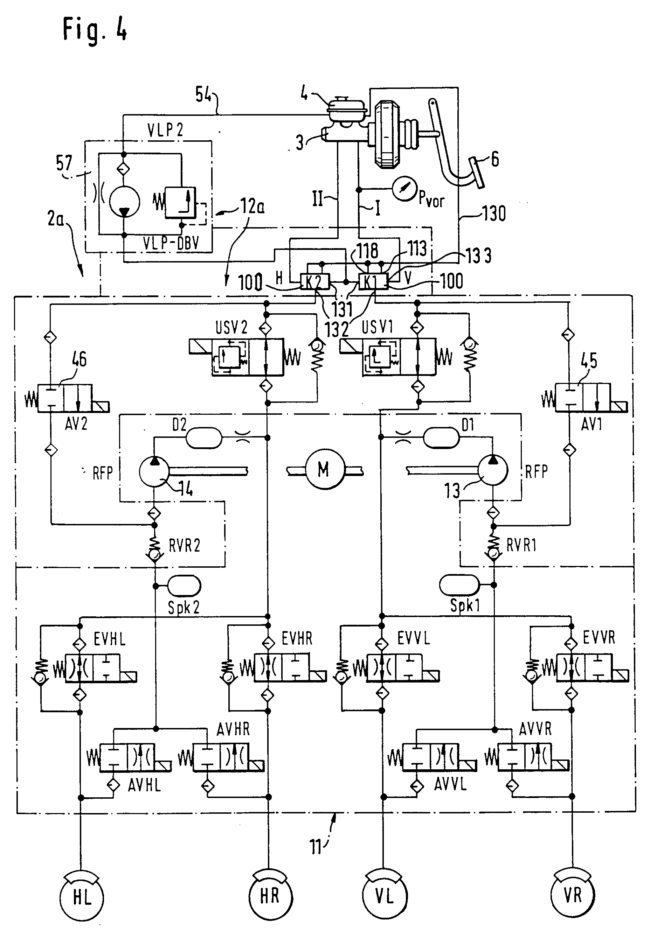

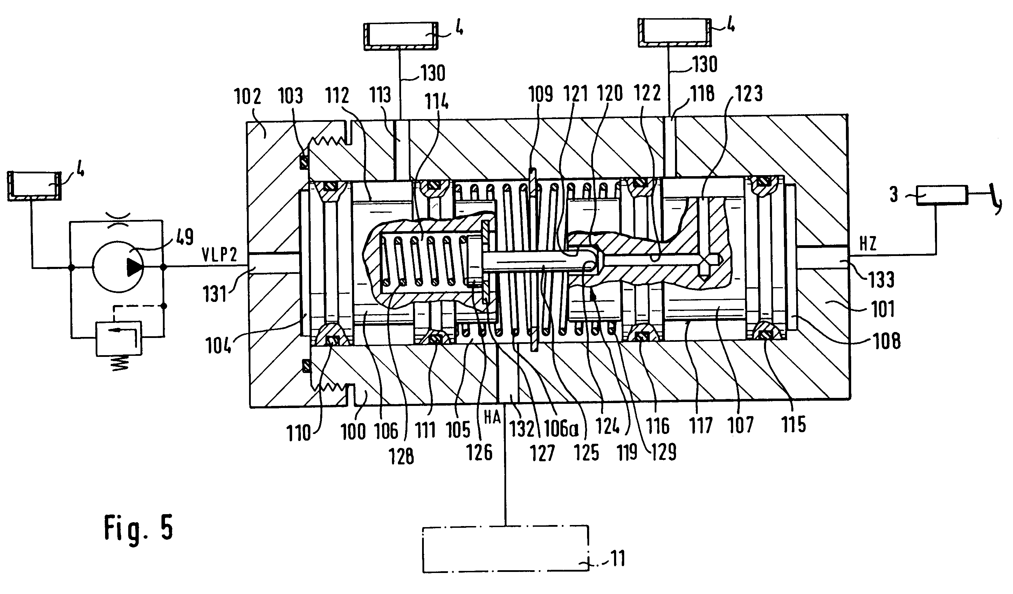

Zwei Ausführungsbeispiele der erfindungsgemäßen hydraulischen Fahrzeugbremsanlage sind in der Zeichnung dargestellt. Es zeigen Figur 1 ein erstes Ausführungsbeispiel, Figur 2 eine Einzelheit für das Ausführungsbeispiel der Figur 1 im vergrößerten Maßstab, Figur 3 ein elektrisches Blockschaltbild für das Ausführungsbeispiel der Figur 1, Figur 4 ein zweites Ausführungsbeispiel der erfindungsgemäßen Fahrzeugbremsanlage und Figur 5 eine Einzelheit im vergrößerten Maßstab im Längsschnitt für das Ausführungsbeispiel gemäß der Figur 4.

### Beschreibung der Ausführungsbeispiele

### Erstes Ausführungsbeispiel

Das Ausführungsbeispiel der erfindungsgemäßen hydraulischen Fahrzeugbremsanlage gemäß der Figur 1 besitzt einen zweikreisigen Hauptbremszylinder 3 mit einem ihn versorgenden Reservoir 4 und beispielsweise einem pneumatischen Bremskraftverstärker 5 sowie ein Bremspedal 6, zwei Bremskreise I und II, dem Bremskreis I zugeordnete Vorderradbremsen 7 und 8, dem Bremskreis II zugeordnete Hinterradbremsen 9 und 10, eine zwischen dem Hauptbremszylinder 3 und den Radbremsen 7 bis 10 angeordnete Blockierschutzeinrichtung 11 und eine zusätzliche Einrichtung 12 zum automatischen Bremsen.

Der Hauptbremszylinder 3 ist in an sich bekannter Weise aufgebaut und unter Zuhilfenahme des Bremspedals 6 betätigbar, so daß in den Bremskreisen I und II Bremsdrücke entstehen. Die mittels des Bremspedals 6 auf den Hauptbremszylinder 3 ausübbare Wirkung ist mittels des Bremskraftverstärkers 5 verstärkbar. Das Reservoir 4 versorgt den Hauptbremszylinder 3 mit Druckmittel, das vom Hauptbremszylinder 3 in Richtung der Radbremsen 7 bis 10 drückbar ist durch die zusätzliche Einrichtung 12 und die Blockierschutzeinrichtung 11 hindurch für den Normalbremsbetrieb.

Die Blockierschutzeinrichtung 11 ist eine Blockierschutzeinrichtung des sogenannten Rückfördertyps und besitzt hier für den Bremskreis I eine Rückförderpumpe 13 und für den Bremskreis II eine Rückförderpumpe 14. Ferner besitzt die Blockierschutzeinrichtung 11 für jede der Radbremsen 7 bis 10 eine eigene Bremsdruckmodulationsventilanordnung 15, 16, 17 bzw. 18, bestehend aus jeweils einem Bremsdruckaufbauventil 19 und einem jeweiligen Bremsdruckabsenkventil 20, sowie für jeden Bremskreis I und II eine Speicherkammer 21 bzw. 22. Des weiteren sind beispielsweise eine erste Dämpferkammer 23 für den Bremskreis I und eine zweite Dämpferkammer 24 für den Bremskreis II sowie eine Dämpferdrossel 25 bzw. Dämpferdrossel 26 vorgesehen. Ein Motor 27 ist als Antrieb den Rückförderpumpen 13 und 14 zugeordnet. Ausgehend von den Radbremsen 7 bis 10 sind deren jeweils zugeordnete Bremsdruckaufbauventile 19 in Richtung zum Hauptbremszylinder 3 umgehbar mittels Rückschlagventilen 28, die in Richtung zum Hauptbremszylinder 3 hin öffenbar sind bei einem Druckgefälle über dem jeweiligen Bremsdruckaufbauventil 19, beispielseise wenn dieses in seine Sperrstellung gesteuert ist oder wenn in seiner normalen Offenstellung eine eingebaute Drossel wirksam ist.

Blockierschutzbetrieb ist möglich mittels der für die Blockierschutzeinrichtung 12 genannten einzelnen Elemente. Hierzu befinden sich die normalerweise in der Offenstellung befindlichen Bremsdruckaufbauventile 19 zwischen der jeweiligen der Radbremsen 7 bis 10 und dem Hauptbremszylinder 3, so daß durch Betätigung des Bremspedals 6 im Hauptbremszylinder 3 erzeugte Drücke normalerweise in die Radbremsen 7 bis 10 gelangen können. Jeweils ebenfalls mit den Radbremsen 7 bis 10 verbundene Bremsdruckabsenkventile 20 der Bremsdruckmodulationsventilanordnungen 15 und 16 bzw. 17 und 18 sind in der Normalstellung geschlossen und ermöglichen in angesteuerter Stellung einen drosselnden Durchlaß, und sind mit der Rückförderpumpe 13 des Bremskreises 1 eingangsseitig bzw. mit der Rückförderpumpe 14 des Bremskreises II eingangsseitig verbunden. Ausgangsseitig an die Rückförderpumpe 13 bzw. 14 schließen sich die Dämpferkammern 23 bzw. 24 an. In Richtung zum Hauptbremszylinder 3 sowie zu den jeweiligen Bremsdruckaufbauventilen 9 folgen die Drosseln 25 bzw. 26 auf die Dämpferkammern 23 bzw. 24.

Zur Blockierschutzeinrichtung 11 gehören noch ein Steuergerät 30, das umrißhaft in der Figur 3 dargestellt ist, sowie den nicht dargestellten Rädern der Radbremsen 7 bis 10 zugeordnete Raddrehungssensoren 31 bis 34. Das Steuergerät 30 ist an diese Raddrehungssensoren 31 bis 34 angeschlossen. An das Steuergerät 30 seinerseits sind zum einen die einzelnen Ventile 19, 20 der Bremsdruckmodulationsventilanordnungen 15 bis 18 angeschlossen und andererseits der Motor 27. Des weiteren kann beispielsweise im Bereich des Bremspedals 6 ein Bremspedalschalter 35 und/oder ein Druckfühler 36 angeordnet sein, die mit dem Steuergerät 30 verbunden sind.

Durch Betätigung des Bremspedals 6 wird beispielsweise unter Zuhilfenahme des Bremskraftverstärkers 5 im Hauptbremszylinder 3 Druck erzeugt, der sich durch die offenstehenden Bremsdruckaufbauventile 19 der beiden Bremskreise I und II hindurch zu den Radbremsen 7, 8, 9 und 10 fortpflanzt.

Wird beispielsweise auf gleichmäßig griffiger Fahrbahn das Bremspedal 6 zunehmend stärker bestätigt, so verändern sich die Folgen von aus den Raddrehungssensoren 31 bis 34 abgegebenen Signalen in einer Weise, die das Steuergerät 30 schließlich als eine Radblockiergefahr deutet. Angenommen, es tritt Radblockiergefahr gleichzeitig an allen Rädern gleich stark auf, so schaltet das Sternergerät 30 den Motor 27 und damit die Rückförderpumpen 13 und 14 ein, schließt alle Bremsdruckaufbauventile 19 der Bremsdruckmodulationsventileinrichtungen 15 bis 18 und öffnet alle zugeordneten Bremsdruckabsenkventile 20. Dies hat zur Folge, daß im Hauptbremszylinder 3 gegebenenfalls noch ansteigender Druck nicht in die Radbremsen 7 bis 10 gelangt, sondern daß aus diesen Radbremsen Druckmittelmengen abströmen zu den Speicherkammern 21 bzw. 22. Aus den Speicherkammern 21 bzw. 22 fließen dann Druckmittelmengen in die Rückförderpumpen 13 bzw. 14 ein. Infolgedessen drücken diese Rückförderpumpen 13 und 14 Druckmittel durch die Dämpferkammern 23 und 24 und die Drosseln 25 und 26 und durch die beiden Bremskreise I und II zurück zum Hauptbremszylinder 3. Nach Beenden von Radblockiergefahr, es sei hier angenommen, daß zufälligerweise die Radblockiergefahr an allen Radbremsen 7 bis 10 gleichzeitig verschwindet, werden die Bremsdruckmodulationsventilanordnungen 15 bis 18 in ihre Grundstellungen verbracht, indem das Steuergerät 30 die Zufuhr von für das Bremsdruckabsenken notwendigen Steuerströmen beendet. Tritt beispielsweise während einer darauffolgenden vorgewählten Zeitspanne keine Radblockiergefahr mehr auf, dann beendet das Steuergerät 30 auch die Stromzufuhr zum Motor 27.

In beispielsweise an sich bekannter Weise ist das Steuergerät 30 auch so eingerichtet, daß Drücke der Vorderradbremsen 7 und 8 individuell und unabhängig voneinander modulierbar sind, damit eine möglichst günstige Bremswirkung der Vorderräder erzeugbar ist auf Fahrbahnen mit streifenweise unterschiedlichen Reibbeiwerten. Beispielsweise kann dabei rechts am Rand einer Fahrbahn ein niedriger Reibwert infolge Vereisung und links unter dem Fahrzeug ein hoher Reibwert über einem trockenen Fahrbahnstreifen vorhanden sein.

Ein solches individuelles Steuer- bzw. Regelprinzip ist auch anwendbar für die Hinterradbremsen 9 und 10, jedoch wird beispielsweise unter bestimmten Voraussetzungen auch Gebrach gemacht von einer sogenannten "selec-low"-Regelung, d.h., wenn eines der Hinterräder zu blockieren droht, wird auch in der Radbremse des anderen Hinterrades Bremsdruck abgesenkt. Dadurch wird zwar der Beitrag zur Fahrzeugverzögerung, den die Hinterradbremsen liefern, gegebenenfalls vermindert, jedoch kann dies zugunsten von Seitenführungskräften während des Durchfahrens einer Kurve sehr vorteilhaft sein für das Fahrverhalten. Hier ist eine günstige Auswirkung auf das Fahrverhalten in dem Sinne gemeint, daß ein seitliches Driften der Hinterräder aus der Kurve heraus unterdrückbar ist. Die angesprochene "selec-low"-Regelung der Hinterradbremsen 9 und 10 ist also eine nützliche Maßnahme zur Beeinflussung des Bewegungsverhaltens des Fahrzeugs, insbesondere des Drehverhaltens um den Schwerpunkt bzw. die Hochsachse des Fahrzeugs. Einer unerwünschten Drehbeschleunigung des Fahrzeugs um die Hochachse, also einer Eigendynamik, des Fahrzeugs kann also auf die beschriebene Weise entgegengewirkt werden.

Zur Einrichtung 12 zum automatischen Bremsen gehören innerhalb der Bremskreise I und II jeweils ein Zylinder 37 bzw. 38, ein Umschaltventil 39 bzw. 40, ein Druckbegrenzungsventil 41 bzw. 42 und aus Sicherheitsgründen je ein Rückschlagventil 43 bzw. 44. Des weiteren sind den Rückförderpumpen 13 bzw. 14 eingangsseitig noch 2/2-Wegeventile 45 und 46 sowie Rückschlagventile 91 und 92 zugeordnet. Zur indirekten Versorgung der Einrichtung 12 gehören noch eine Hilfspumpe 49 mit einem Hilfsmotor 50, ein Hilfsdruckbegrenzungsventil 51 sowie eine Drossel 52.

Der Hilfsmotor 50 ist an das Steuergerät 30 angeschlossen und von dem Steuergerät 30 einschaltbar, so daß die Hilfspumpe 49 antreibbar ist. Die Hilfspumpe 49 besitzt einen Eingang 53, der im Beispiel über eine Leitung 54 an das Reservoir 4 des Hauptbremszylinders 3 angeschlossen ist. Ein Ausgang 55 ist über eine Hilfsdruckleitung 56 mit den beiden Zylindern 37 und 38 verbunden. Das Hilfsdruckbegrenzungsventil 51 ist eingangsseitig an den Ausgang 55 der Hilfspumpe 49 angeschlossen und öffenbar in Richtung zum Eingang 53 dieser Hilfspumpe 49 bzw. der Leitung 54, die mit dem Reservoir 4 kommuniziert. Das Hilfsdruckbegrenzungsventil 51 ist beispielsweise derart eingerichtet, daß es bei einem Druck in der Größenordnung von 5 bis 10 bar öffenbar ist. Ebenfalls an den Ausgang 55 der Hilfspumpe 49 ist die Drossel 52 angeschlossen, die andererseits mit der Leitung 54 und dem Eingang 53 der Hilfspumpe 49 kommuniziert. Bei stillstehender Hilfspumpe 49 besorgt die Drossel 52 das Verschwinden von Druckunterschieden zwischen dem Ausgang 55 und dem Eingang 53. Im Zusammenwirken des Steuergeräts 30 mit dem Hilfsmotor 50 bilden die aufgezählten Elemente eine steuerbare Hilfsdruckquelle 57.

Die Zylinder 37 und 38 sind identisch ausgebildet. Deshalb ist es lediglich notwendig, den Zylinder 37 zu beschreiben anhand der Figur 2. Der Zylinder 37 weist eine Stirnwand 58 und einen Deckel 59 auf und besitzt im Bereich der Stirnwand 58 einen Druckanschluß 60 zur Verbindung mit der Hilfspumpe 49 und im Bereich des Deckels 59 einen Anschluß 61 zur Blockierschutzeinrichtung 11 sowie einen Anschluß 62 zum Hauptbremszylinder 3. Der Deckel 59 wird beispielsweise mittels eines Drahtringes 63, der in eine in den Zylinder 37 eingearbeitete Nut 64 eintaucht, im Zylinder 37 gehalten. Ein Dichtungsring 65 verhindert Durchtritt von Druckmittel zwischen dem Zylinder 37 und dem Deckel 59.

Innerhalb des Zylindes 37 ist ein Trennkolben 66 verschiebbar, der einen Innenraum des Zylinders 37 zwischen der Stirnwand 58 und dem Deckel 59 in einen Primärraum 67 und einen Sekundärraum 68 unterteilt. Je nach Stellung des Trennkolbens 66, ausgehend von der in der Figur 2 dargestellten Ausgangsstellung in Anlage zur Stirnwand 58, ist das Volumen des Primärraumes 67 vergrößerbar und das Volumen des Sekundärraumes 68 verkleinerbar. Zwischen den Trennkolben 66 und den Deckel 59 ist eine Trennkolbenrückstellfeder 69 eingebaut. Im eingebauten Zustand besitzt die Trennkolbenrückstellfeder 69 eine Vorspannung, so daß die Grundstellung des Trennkolbens 66 anliegend an die Stirnwand 58 bestimmt ist. Im Bereich der Primärkammer 67 besitzt der Trennkolben 66 einen ersten Kolbendichtring 70 und im Bereich der Sekundärkammer 68 einen zweiten Kolbendichtring 71. In einem Bereich zwischen den beiden Kolbendichtringen 70 und 71 besitzt der Trennkolben 66 eine Einschnürung 72. Der Kolbendichtring 71 ist bevorzugt als ein Lippendichtring ausgebildet, der bei einem Druckgefälle vom Anschluß 62 zum Anschluß 61 vom Druckmittel umströmbar ist. Zwischen der Trennkolbenrückstellfeder 69 und dem Deckel 59 befindet sich ein Federteller 73, an dem die Trennkolbenrückstellfeder 69 mit der vorher genannten Vorspannung anliegt. Von dem Federteller 73 geht in Richtung zu dem Trennkolben 66 ein rohrartiger Ansatz 74 aus, der in einen Axialanschlag 75 übergeht. Der Axialanschlag 75 hat in der Längsachse des Zylinders 37 eine Öffnung 76. Zwischen dem Axialanschlag 75 und dem Trennkolben 66 ist ein Abstand vorhanden. In axialer Richtung des Trennkolbens 66 hat die Einschnürung 72 eine Längserstreckung, die wenigstens so lang ist wie der Abstand zwischen dem Axialanschlag 75 und dem Trennkolben 66. Der Anschluß 62 ist so am Zylinder 37 plaziert, daß er in allen möglichen Stellungen des Trennkolbens 76 mit der Einschnürung 72 kommuniziert.

In der Längsachse des Trennkolbens 66 ist ein 2/2-Wegeventil 77 untergebracht. Hierzu ist in dem Trennkolben 66 eine Ventilkammer 78 untergebracht. Angrenzend an die Ventilkammer 78 ist in den Trennkolben 66 ein Ventilsitz 79 eingebaut. Von dem Ventilsitz 79 gehen Kanäle 80, 81 aus. Im Beispiel besteht der Kanal 80 aus einer Längsbohrung und der Kanal 81 wird von einer Querbohrung gebildet, die in die Einschnürung 72 mündet. Der Ventilsitz 79 ist verschließbar mittels einer Ventilkugel 82. Die Ventilkugel 82 ist an einem Ventilschaft 83 befestigt, der sich aus der Ventilkammer 78 heraus und in die Öffnung 76 des Axialanschlags 75 erstreckt. Innerhalb des rohrartigen Ansatzes 74 geht der Ventilschaft 83 über in einen Bund 84, der an den Axialanschlag 75 anlegbar ist. Innerhalb der Ventilkammer 78 umgibt eine gestufte Hülse 85 den Ventilschaft 83. Die Stufe mit dem kleineren Durchmesser zeigt zum Axialanschlag 75. Zwischen der Trennkolbenrückstellfeder 69 und dem Trennkolben 66 befindet sich ein weiterer Federteller 86. Der Federteller 86 besitzt in der Längsachse des Trennkolbens 66 eine zentrale Öffnung 87, durch die hindurch sich mit Bewegungsspiel der Ventilschaft 83 erstreckt.

Eine Schließfeder 88 umgibt den den geringeren Durchmesser aufweisenden Teil der gestuften Hülse 85 und stützt sich am Teil mit dem größeren Durchmesser sowie an dem Federteller 86 ab. Die Länge des Ventilschaftes 83 ist so gewählt, daß bei dem in der Normal- bzw. Ausgangsstellung befindlichen Trennkolben 66 und bei am Axialanschlag 75 anliegendem Bund 84 die Ventilkugel 82 den Ventilsitz 79 nicht verschließt. Erst anläßlich einer Verschiebung des Trennkolbens 66 trifft der Ventilsitz 79 gegen die Ventilkugel 82, wodurch die Schließfeder 88 zur Wirkung kommt und die Kugel 82 gegen den Ventilsitz 79 drückt. Bei weiterer Bewegung des Trennkolbens 66 wird zusätzlich der Ventilschaft 83 bewegt, so daß sich der Bund 84 von dem Axialanschlag 75 löst. Bei Einbau der Schließfeder 88 mit begrenzter Vorspannung ist bei einem ausreichenden Druckgefälle von der Einschnürung 72 in Richtung zur Sekundärkammer 68 das 2/2-Ventil 77 öffenbar nach Art eines Rückschlagventils.

Wie bereits erwähnt, ist der Anschluß 62 mit dem Hauptbremszylinder 3 verbunden. Sinngemäß ist auch der Zylinder 38 mit dem Hauptbremszylinder 3 verbunden durch dessen Bremskreis II. Der Anschluß 61 des Zylinders 37 ist durch das normalerweise offenstehende Umschaltventil 39 des Bremskreises I mit den Bremsdruckaufbauventilen 19 der Bremsdruckmodulationsventilanordnungen 15 und 16 verbunden. In Richtung von dem Zylinder 37 zu den Bremsdruckmodulationsventilanordnungen 15 und 16 ist mittels des Rückschlagventils 43 ein in Richtung zu den genannten Bremsdruckmodulationsventilen öffenbarer Bypass gelegt. Das Umschaltventil 39 ist vorzugsweise mit dem Druckbegrenzungsventil 41 kombiniert, so daß bei elektrischer Ansteuerung anstelle eines freien Durchgangs ein Durchgang in Richtung zum Hauptbremszylinder 3 nur dann entsteht, wenn zwischen den Bremsdruckaufbauventilen 19 und dem Hauptbremszylinder 3 ein ausreichendes Druckgefälle herrscht. Dieses hat eine solche Größe, daß bei unbetätigtem Hauptbremszylinder 3 der vor dem Druckbegrenzungsventil 41 anstehende Druck ausreicht für automatische Bremsungen und gegebenenfalls ein Blockieren von Rädern.

In gleichartiger Weise sind das Umschaltventil 40, das Druckbegrenzungsventil 42 und das Rückschlagventil 44 zwischen den Zylinder 38 und die Bremsdruckaufbauventile 19 der Bremsdruckmodulationsventilanordnungen 17 und 18 eingebaut.

Die 2/2-Wegeventile 45 und 46 sind in ihren Normalstellungen geschlossen und elektrisch öffenbar. Diese 2/2-Wegeventile 45 bzw. 46 befinden sich zwischen den Anschlüssen 61 der Zylinder 37 bzw. 38 und Eingängen 89, 90 der Rückförderpumpen 13 bzw. 14. Zwecks Entkoppelung der Sekundärräume 68 der Zylinder 37 bzw. 38 von den Speicherkammern 21 bzw. 22 sind zwischen diesen und den 2/2-Ventilen 45 bzw. 46 die erwähnten Rückschlageventile 91 bzw. 92 angeordnet. Diese Rückschlagventile 91 und 92 kann man der Einrichtung 12 hinzurechnen, weil die Durchführung von Blockierschutzbetrieb allein diese Rückschlagventile 91 und 92 bei Verwendung von sogenannten Freikolbenpumpen als Rückförderpumpen 13, 14 nicht erforderlich macht.

Der zusätzlichen Einrichtung 12 zugeordnet ist in der Figur 3 eine black box 93. Zu der black box gehören beispielsweise solche Mittel, wie sie in der Einleitungsbeschreibung zur Überwachung des Fahrzeugs auf beginnende Schleudergefahr im einzelnen beschrieben sind. Deshalb werden hier nur die Stichworte erwähnt wie Kreiselgerät und Überwachung der Drehbeschleunigung, Beschleunigungssensoren, Weiterverwendung von Raddrehungssensoren und Radschlupfmeßeinrichtungen und Grenzwertschalter zur Gewinnung von Steuersignalen, die auf die Steuerschaltung 30 einwirken und über diese die Hilfsdruckquelle 57, die Rückförderpumpen 13 und 14 sowie die Bremsdruckmodulationsventilanordnungen 15 bis 18, die Umschaltventile 39 und 40 und die 2/2-Wegeventile 45 und 46 steuern.

Tritt beispielsweise an einem erfindungsgemäß ausgerüsteten Fahrzeug bei einem nicht gebremstem Durchfahren einer Kurve eine Schleudergefahr auf, so erkennt dies die mit der black box 93 umrissene Überwachungseinrichtung, die bei Überschreitung eines vorgegebenen Grenzwertes beispielsweise die Bremsdruckaufbauventile 19 der Hinterradbremsen 9 und 10 in die Sperrstellungen steuert, den Hilfsmotor 50 einschaltet, das 2/2-Wegeventil 45 öffnet, das Umschaltventil 39 schließt und den Motor 27 zum Antrieb der Rückförderpumpe 13 einschaltet. Dadurch erzeugt die Hilfspumpe 39 Hilfsdruck, der durch die Leitung 56 in die Primärkammer 67 des Zylinders 37 gelangt und den Trennkolben 66 verschiebt. Dabei verschließt der Trennkolben 66 das 2/2-Wegeventil 77, und in der Sekundärkammer 68 entsteht ein Druck, so daß aus dieser Sekundärkammer 68 Druckmittel durch das geöffnete 2/2-Wegeventil 45 zum Eingang 89 der Rückförderpumpe 13 und durch das Rückschlagventil 43 zu den Radbremszylindern 7 und 8 strömt. Mittels in den Zylinder 37 eingeleiteten Hilfsdrucks wird so indirekt die Rückförderpumpe 13 gefüllt, so daß diese vor dem geschlossenen Umschaltventil 39 Druck aufbauen kann, der durch die geöffneten Bremsdruckaufbauventile 19 der Bremsdruckmodulationsventilanordnungen 15 und 16 in die Radbremsen 7 und 8 gelangt. Es werden also beispielsweise hier beide Vorderräder gebremst, wodurch, wie dies der Stand der Technik lehrt, auch die Seitenführungskräfte der Vorderräder verringert werden. Dies hat die gewollte Auswirkung, daß seitlicher Schlupf entsteht oder vergrößert wird auf die Größenordnung oder gegebenenfalls über die Größe des seitlichen Schlupfes der Hinterräder. Dies hat die beabsichtigte Folge, daß einer Zunahme der Drehgeschwindigkeit des Fahrzeugs um die Hochachse, also einem Schleudern, entgegengewirkt oder ein Schleudern beendet wird.

Wenn ein im oben genannten Sinne beabsichtigter Bremsdruck erreicht ist, werden die Bremsdruckaufbauventile 19 der Bremsdruckmodulationsventilanordnungen 15 und 16 geschlossen, wodurch wenigstens zunächst die Bremsdrücke in den Radbremsen 7 und 8 konstant bleiben.

Da während einer solchen Zeitspanne von der Rückförderpumpe im Überschuß durch das Druckbegrenzungsventil 41 gefördertes Druckmittel unnützen Energieverbrauch und lästiges Pumpgeräusch verursachen würde, kann man während einer solchen Zeitspanne mittels des Steuergeräts 30 das 2/2-Wegenventil 45 vorübergehend schließen. Dadurch erhält der Eingang 89 der Rückförderpumpe 13 kein Druckmittel zugeführt und die Rückförderpumpe läuft leer.

Stellen die in der black box 93 zugeordneten Mittel fest, daß einer Schleudergefahr ausreichend entgegengewirkt ist, d.h. daß ein vorgewählter Grenzwert unterschritten wird, so kann der zunächst in den Radbremsen 7 und 8 eingeschlossene Bremsdruck wenigstens teilweise abgesenkt werden. Dies wird erreicht durch Öffnen der Bremsdruckabsenkventile 20 der Bremsdruckmodulationsventilanordnungen 15 und 16. Dadurch gelangt Druckmittel aus den Radbremsen 7 und 8 zur Speicherkammer 21 und schließlich auch durch das Rückschlagventil 91 hindurch in die Rückförderpumpe, von wo aus es durch das Druckbegrenzungsventil 41 in den Zylinder 37 zurückgedrängt wird. Hierbei weicht der Trennkolben 66 gegen den geringeren, vom Hilfsdruckbegrenzungsventil 51 eingestellten Hilfsdruck zurück.

Wenn ein erneuter Bremsdruckaufbau benötigt wird, so wird das 2/2-Wegeventil 45 geöffnet, wodurch die Rückförderpumpe 13 erneut Druck aufbauen kann, den man mittels der Bremsdruckaufbauventile 19 in der bereits beschriebenen Weise den Radbremsen 7 und 8 zuleiten kann.

Im beschriebenen Fall sind nur die Radbremsen 7 und 8 zur Verbesserung des Kurvenfahrverhaltens des Fahrzeugs eingesetzt. Für den voranstehend beschriebenen Fall wurde von Schleudergefahr durch Driften der Hinterachse, also von einer sogenannten Übersteuerungstendenz ausgegangen. Fahrzeuge mit Übersteuerungstendenz sind verbreitet, aber es gibt auch Fahrzeuge mit Untersteuerungstendenz. Es kann sogar vorkommen, daß je nach Art der Beladung ein Fahrzeug einmal Übersteuerungstendenz und das andere Mal Untersteuerungstendenz aufweist. Tritt Untersteuerungstendenz auf, so kann der Dynamik, die sich durch mangelhafte Seitenführungskraft von Vorderrädern ergibt, kompensierend entgegengewirkt werden, indem man Seitenführungskräfte der Hinterräder automatisch vermindert. Hierzu sind den Hinterradbremsen 9 und 10 automatisch Bremsdrücke zuzuführen. Dies geschieht sinngemäß in einer für die Radbremsen 7 und 8 von Vorderrädern beschriebenen Weise. Deshalb erübrigt sich eine nochmalige Beschreibung, die sich von der vorherigen nur durch andere Bezugszeichen unterscheiden würde.

Die Gefahr des Schleuderns kann nicht nur beim Fahren mit im wesentlichen gleichbleibender Geschwindigkeit auftreten, sondern sie kann auch ausgelöst werden durch Bremsen in einer Kurve. Dies insbesondere deshalb, weil beim Bremsen eine dynamische Erhöhung der Last der Vorderräder und eine dynamische Verminderung der Last der Hinterräder zustande kommt, obwohl der Masseschwerpunkt des Fahrzeugs seine Ausrichtung relativ zu der Vorderachse und der Hinterachse beibehält. Erkennbar werden also Seitenführungskräfte der Hinterräder tendenziell schwächer relativ zu den Seitenführungskräften der Vorderräder, so daß damit eine Drehbeschleunigung des Fahrzeugs um seinen Schwerpunkt einsetzen und ein unzulässiger Grenzwert erreicht werden kann. In diesem Fall ist es notwendig, einen vom Fahrer durch Betätigung des Bremspedals 6 für die Vorderradbremsen 7 und 8 gewählten Bremsdruck automatisch zu erhöhen. Auch dies ist möglich durch Inbetriebnahme der zusätzlichen Einrichtung 12 und der Blockierschutzeinrichtung 11. Bei dieser Inbetriebnahme dominiert dann die Kombination aus der Blockierschutzeinrichtung 11 und der zusätzlichen Einrichtung 12 für das automatische Bremsen über den Fahrerwillen. Wenn also der Fahrer schon gebremst hat, dann bewirkt der automatische Bremsbetrieb wenigstens für eine der Vorderradbremsen einen erhöhten Bremsdruck, so daß wie in dem in der Einleitung beschriebenen Stand der Technik die Summe der Seitenführungskräfte der Vorderräder vermindert wird.

Weil erkennbar die Fahrzeugbremsanlage in der Lage ist, in allen Radbremsen von vier Fahrzeugrädern dank der vier Bremsdruckmodulationsventilanordnungen 15 bis 18 Bremsdrücke automatisch individuell einzusteuern, ist diese Fahrzeugbremsanlage auch zur Durchführung von Antriebsschlupfregelung geeignet, gleichgültig, ob die Vorderräder oder die Hinterräder oder ob Vorder- und Hinterräder antreibbar sind. Antriebsschlupfregelung wird nach den bekannten Erfordernissen durchgeführt wiederum unter Verwendung der Hilfspumpe 49 und der Zylinder 37 und 38 sowie den Umschaltventilen 39, 40 und den 2/2-Wegeventilen 45 und 46 sowie der Blockierschutzeinrichtung 11 für den Fall der Antriebsschlupfregelung an allen vier Rädern. Weil Antriebsschlupfregeleinrichtungen sowohl für antreibbare Vorderräder, denen Diagonalbremskreise zugeordnet sind, und auch für Hinterräder, bei denen meist eine Vorn-Hinten-Bremskreisaufteilung gewählt ist, notorisch bekannt sind, erübrigt sich eine Steuerungs- bzw. Funktionsbeschreibung für die Antriebsschlupfregelung.

Situationsbedingt kann es notwendig werden, daß während eines Antriebsschlupfregelbetriebs der hierbei in den jeweiligen Radbremsen vorhandene Druck per Bremspedalbetätigung überhöht werden muß. Dies ist erreichbar durch hydraulische Überwindung der Schließkraft der Schließfeder 88 des 2/2-Wegeventils 88, das sich im Trennkolben 66 befindet. Durch ausreichendes Steigern der Kraft auf das Bremspedal steigt der Hauptzylinderdruck nämlich soweit an, daß gegen die Schließkraft der Schließfeder 88 und den Hilfsdruck in der Sekundärkammer 68 die Kugel 82 von dem Ventilsitz 79 abhebbar ist. Andererseits ist aber auch der Lippendichtring 71 umströmbar. Wenn zu diesem Zeitpunkt das Umschaltventil 39 der Vorderradbremsen, zu denen antreibbare Räder gehören, noch geschlossen sein sollte, so öffnet der Druck das Rückschlagventil 43, das einen Bypass um das undurchlässige Umschaltventil 39 bildet, so daß Bremsdruckerhöhung in den Radbremsen 7 und 8 in der vom Fahrer gewünschten Weise möglich ist. Zwar wird hierbei der Trennkolben 66, weil er vom Sekundärraum 68 aus mit einem höheren Druck als dem Hilfsdruck im Primärraum 67 beaufschlagt wird, in Richtung seiner Ausgangsstellung zur Stirnwand 58 ausweichen, aber dies verursacht keinen störenden Nachteil, weil zuvor durch eine Verschiebung des Trennkolbens 66 allein mittels des Hilfsdrucks die Radbremsen 7 und 8 gefüllt wurden.

Die Figur 1 ist mit Bezugszeichen von Vorderradbremsen und von Hinterradbremsen in der Weise versehen, daß der Bremskreis I ein sogenannter Vorderachsbremskreis und der Bremskreis II ein sogenannter Hinterachsbremskreis ist. Eine solche Bremskreisaufteilung wird auch als TT-Bremskreisaufteilung bezeichnet. Der Erfindungsgedanke ist aber nicht auf solche TT-Bremskreise eingeschränkt, denn es ist erkennbar, daß man durch Vertauschen der Bezugszeichen von Vorderradbremsen und Hinterradbremsen auch zu sogenannten Diagonalbremskreisen, die als K-Bremskreise bezeichnet werden, gelangt. Dabei sind alle vier Räder einzeln mit Bremsdrücken automatisch versorgbar und es kann einem nachteiligen dynamischen Eigenverhalten des Fahrzeugs entgegengewirkt werden.

### Zweites Ausführungsbeispiel

Im Prinzip unterscheidet sich das zweite Ausführungsbeispiel gemäß den Figuren 4 und 5 von dem ersten Ausführungsbeispiel gemäß den Figuren 1 und 2 lediglich dadurch, daß der Zylinder 100 und der Trennkolben 106 anders ausgebildet sind, und daß der Zylinder 100 zusätzlich einen Schwimmkolben 107 aufnimmt.

Der Zylinder 100 besitzt an einem Ende eine Stirnwand 101 und am gegenüberliegenden Ende einen angeschraubten Deckel 102 sowie einen Dichtring 103 zwischen dem Deckel 102 und dem Zylinder 100. Das Innere des Zylinders 100 zwischen dem Deckel 102 und der Stirnwand 101 ist einerseits unterteilt in einen an den Deckel 102 angrenzenden Primärraum 104 und einen Sekundärraum 105 durch Anordnung des längsverschieblichen Trennkolbens 106 und zusätzlich durch Anordnung eines frei verschiebbaren Schwimmkolbens 107 in einen an die Stirnwand 102 angrenzenden Betätigungsraum 108. Dem Trennkolben 106 ist ebenfalls eine Trennkolbenrückstellfeder 106a zugeordnet, die sich im Beispiel an einem nach Art eines Federrings in den Zylinder 100 eingelassenen Axialanschlag 109 abstützt. In axialem Abstand besitzt der Trennkolben 106 einen ersten Kolbendichtring 110 und einen zweiten Kolbendichtring 111. Dazwischen besitzt der Trennkolben 106 eine Einschnürung 112. In axialer Richtung ist die Einschnürung 112 etwas länger ausgebildet als ein vorgewählter längster Verschiebeweg des Trennkolbens 106. Der Einschnürung 112 zugeordnet ist in der Wandung des Zylinders 100 eine Entlastungsöffnung 113. Diese Entlastungsöffnung 113 ist so plaziert, daß sie, während sich der Trennkolben 106 in seinen Endstellungen oder Zwischenstellungen befindet, mit der Einschnürung 112 kommuniziert und von keiner der beiden Kolbendichtungen 110 und 111 passiert wird. In seiner Längsachse besitzt der Trennkolben 106 eine zum Sekundärraum 105 hin offene Federkammer 114.

Im Bereich des Betätigungsraumes 108 besitzt der Schwimmkolben 107 einen ersten Dichtring 115 und in einem axialen Abstand davon zum Sekundärraum 105 hin einen zweiten Dichtring 116. Zwischen den beiden Dichtringen besitzt der Schwimmkolben 107 eine Einschnürung 117, deren Erstreckung in axialer Richtung wenigstens so lang ist wie ein vorgewählter längster Verschiebeweg des Schwimmkolbens 107. In der Wandung des Zylinders 100 ist der Einschnürung 117 eine Versorgungsöffnung 118 zugeordnet. Dabei ist die Versorgungsöffnung 118 derart ausgerichtet, daß sie in allen möglichen Verschiebestellungen des Schwimmkolbens 107 mit der Einschnürung 117 kommuniziert.

In der Längsachse des Schwimmkolbens 107 ist ein 2/2-Wegeventil 119 eingebaut. Es besitzt einen Ventilsitz 120, der beispielsweise herstellbar ist durch Anordnung einer Stufenbohrung 121, 122 in der Längsachse des Schwinnkolbens 107 ausgehend von dem Sekundärraum 105. Dabei dient die Stufenbohrung 122 als ein Kanalabschnitt, während ein weiterer Kanalabschnitt von einer Querbohrung 123 gebildet wird, die in die Einschnürung 117 mündet. Ein Ventilschließelement 124 wird gebildet von einem Ende eines Ventilschaftes 125, an dem sich ein Bund 126 befindet. Der Bund 126 taucht ein in die Federkammer 114. Im Bereich des Eingangs der Federkammer 114 ist dem Bund 126 ein Axialanschlag 127 zugeordnet. Innerhalb der Federkammer 114 be- findet sich eine vorgespannte Schließfeder 128, die normalerweise den Bund 126 in Richtung zum Schwimmkolben 107 drückt und dabei den Bund 126 an den Axialanschlag 127 anlegt. Eine dem Schwimmkolben 107 zugeordnete Schwimmkolbenrückstellfeder 129 befindet sich im Sekun- därraum 105, um den Schwimmkolben 107 in eine Ausgangsstellung nahe der Stirnwand 101 zu drücken. Wenn sich der Schwimmkolben 107 in dieser Normalstellung und auch der Trennkolben 106 in seiner Normalstellung befindet, so hat das Schließelement 124 in axialer Richtung einen Abstand von dem Ventilsitz 120. Sowohl eine Verschiebung des Trennkolbens 106 gegen den Schwimmkolben 107 als auch eine Verschiebung des Schwimmkolbens 107 gegen den Trennkolben 106 sowie auch eine gleichzeitige Verschiebung beider Kolben 106 und 107 gegeneinander bewirken ein Schließen des 2/2-Wegeventils 119.

Im Beispiel ist die Entlastungsöffnung 113 über eine Leitung 130 mit dem Reservoir 4 und die Versorgungsöffnung 118 mit dem Reservoir 4 beispielsweise ebenfalls über die Leitung 130 verbunden. Der Primärraum 104 ist über einen Hilfsdruckanschluß 131 an die Hilfsdruckquelle 57 angeschlossen. Ein von dem Sekundärraum 105 ausgehender Anschluß 132 dient zur Versorgung der zugeordneten Radbremsen durch die Blockierschutzeinrichtung 11 hindurch. Ein dem Betätigungsraum 108 zugeordneter Betätigungsanschluß 133 ist mit dem Hauptbremszylinder 3 verbunden. Der Zylinder 101 ist identisch ausgebildet. Beide Zylinder 100 und 101 sind über ihre Betätigungsanschlüsse 133 mit dem Hauptbremszylinder 3 verbunden.

### Funktion des zweiten Ausführungsbeispiels

In der Normalstellung befindet sich das 2/2-Wegeventil 119 in seiner offenen Stellung. Dies hat zur Folge, daß der Sekundärraum 105 durch dieses 2/2-Wegeventil 119 und durch die Kanalteilstücke 122 und 123 und die Einschnürung 117 sowie die Versorgungsöffnung 118 und die Leitung 130 mit dem Reservoir 4 des Hauptbremszylinders 3 kommuniziert. Wird zum Zwecke des normalen Bremsens das Bremspedal 6 betätigt, so daß in dem Hauptbremszylinder 3 Druck entsteht, so pflanzt sich dieser Druck im Beispiel für den Bremskreis I fort in den Betätigungsraum 108, so daß der Schwimmkolben 107 in Richtung zum Trennkolben 106 verschoben wird. Wie bereits erwähnt, hat dies das Schließen des 2/2-Wegeventils 119 zur Folge. Dadurch wird der Sekundärraum 105 relativ zum Reservoir 4 verschlossen und innerhalb des Sekundärraums 105 entsteht ein Druck, der praktisch gleich hoch ist wie der Druck im Hauptbremszylinder 3. Der Druck des Sekundärraums 105 pflanzt sich analog dem ersten Ausführungsbeispiel durch die nichtbetätigte Einrichtung 12a und die nichtbetätigte Blockierschutzeinrichtung 11 fort in die Radbremsen. Gleiches gilt natürlich auch für den in dem Bremskreis II angeordneten Zylinder 101. Auch er liefert Bremsdrücke zur Versorgung von Radbremsen.

Wenn anläßlich einer solchen Normalbremsung Blockierschutzbetrieb notwendig wird, so wird die Blockierschutzeinrichtung 11 in gleicher Weise wie im ersten Ausführungsbeispiel arbeiten. Von den Rückförderpumpen 13 und/oder 14 zurückzupumpende Druckmittelmengen verschieben den Schwimmkolben 117 jeweils in Richtung seiner Ausgangsstellung verschieben, so daß aus dem jeweiligen Betätigungsraum 108 Druckmittelmengen zum Hauptbremszylinder 3 zurückströmen. Werden wieder Druckmittelmengen zur Bremsdruckerhöhung in den jeweiligen Radbremsen benötigt, so werden diese infolge der hydraulischen Beaufschlagung des Schwimmkolbens 107 aus dem Sekundärraum 105 geliefert, wobei allerdings auch Druckmittel aus dem Hauptbremszylinder 3 ausfließt und somit das Bremspedal 6 in einer an sich bekannten Weise nach einem vorangegangenen Rückhub absinkt.

Ereignet sich der Fall, daß automatisch zu bremsen ist, dann aktiviert die per black box 93 skizzierte Überwachungseinrichtung 93 gemeinsam mit der Steuereinrichtung 30 die Druckquelle 57, die Einrichtung 12 und die Blockierschutzeinrichtung 11, wobei deren Rückförderpumpen 13 und 14 eingeschaltet werden sowie die unterschiedlichen Ventile in der zum Ausführungsbeispiel 1 beschriebenen Weise angesteuert werden. Insoweit ist kein Unterschied zum Ausführungsbeispiel der Figur 1 vorhanden. Das Einschalten der Hilfsdruckquelle 47 bewirkt wiederum, daß der Trennkolben 106 verschoben wird, daß das 2/2-Wegeventil 119 geschlossen wird, und daß dadurch im Sekundärraum 105 ein Druck erzeugt wird, der praktisch gleich hoch ist wie der Hilfsdruck, der von der Hilfsdruckquelle 57 in den Primärraum 104 gedrückt wird.

Auch bei diesem Ausführungsbeispiel ist es möglich, daß Bremsdruck in den Radbremsen beim automatischen Bremsen erhöht wird über denjenigen Druck hinaus, den ein Fahrer durch Betätigung des Bremspedals 6 im Hauptbremszylinder 3 erzeugt. Dies ist deshalb möglich, weil beim Übergang in den automatischen Bremsbetrieb der durch Beaufschlagung des Betätigungsraums 108 in dem Sekundärraum 105 erzeugte Druck nicht zum Erzeugen des Bremsdrucks in den Radbremsen unmittelbar verwendet wird, sondern dieser Druck wird durch wenigstens eines der 2/2-Ventile 45 bzw. 46 den Rückförderpumpen 13 bzw. 14 zur Erzeugung eines Bremsdruckes zur Verfügung gestellt. In diesem Fall dient der Druck aus dem Hauptbremszylinder 3 nur zur Druckmittelversorgung der wenigstens einen Rückförderpumpe. Weil in dem beschriebenen Betriebsfall der Druck in dem Sekundärraum 105 höher ist als der Hilfsdruck, der Hilfsdruckquelle 57, wird Druckmittel, das zur Überhöhung des vom Fahrer willkürlich gewählten Druckes benötigt wird, durch Verschiebung des Schwimmkolbens 107 bereitgestellt, wobei natürlich wegen der damit verbundenen Druckmittelausströmung aus dem Hauptbremszylinder 3 das Bremspedal 6 etwas absinken wird.

Bei einer Undichtheit des Dichtringes 111 kann Druckmittel aus dem Sekundärraum 105 in Richtung der Einschnürung 112 und der Entlastungsöffnung 113 entweichen. Dies ist beim Bremsen durch Absinken des Bremspedals erkennbar.

Ist der andere Kolbendichtring 110 undicht, so wirkt sich dies lediglich auf den automatischen Bremsbetrieb aus. Falls die Hilfspumpe 49 aus dem Rerservoir 4 Luft ansaugen sollte, so gelangen Luftbläschen am Kolbendichtring 110 vorbei und strömen durch die Einschnürung 112 und die Entlastungsöffnung 113 ab, denn sie können die Druckbarriere im Bereich des anderen Kolbendichtringes 111 nicht überwinden.

Die vorteilhafte Anordnung zweier Kolbendichtringe 110 und 111 zwischen einem für die erfindungsgemäße Bremsanlage typischen Primärraum 104 und einen Sekundärraum 115 kann aus dem Ausführungsbeispiel gemäß der Figur 5 auch übertragen werden in das Ausführungsbeispiel gemäß der Figur 2. Es bedarf dann lediglich einer Verlängerung des Zylinders und einer Verlängerung des Trennkolbens sowie der Anordnung eines dritten Dichtringes und der Anordnung einer Einschnürung und das Zuordnen einer Entlastungsöffnung.

Weil die Dichtringe 115, 116 sowie das 2/2-Wegeventil 119 des Schwimmkolbens 107 einerseits mit einem Hilfsdruck oder Bremsdruck beaufschlagbar sind, andererseits aber dem demgegenüber sehr kleinen in der Versorgungsöffnung 118 herrschenden Druck ausgesetzt sind, ist eine Undichtheit eines oder mehrerer der Elemente 115, 116, und 119 genauso wie eine Undichtheit des Kolbendichtringes 111 beim normalen Bremsen durch Absinken des Bremspedals 6 vom Fahrer erkennbar.

## Patentansprüche

1. Hydraulische Fahrzeugbremsanlange mit einem zweikreisigen Hauptbremszylinder (3), mit einem Reservoir (4) für den Hauptbremszylinder (3), mit zwei Bremskreisen (I, II), die zum Anschließen von Radbremsen (7, 8, 9, 10) eines Kraftfahrzeugs geeignet sind, mit einer den Bremskreisen (I, II) zugeordneten Blockierschutzeinrichtung (11), die Bremsdruckmodulationsventilanordnungen (15, 16, 17, 18) und je Bremskreis (I, II) eine Rückförderpumpe (13, 14) besitzt, und mit einer zusätzlichen Einrichtung (12) zum automatischen Bremsen in Zusammenarbeit mit der Blockierschutzeinrichtung (11), wobei diese zusätzliche Einrichtung (12) zwischen der Kombination aus dem Hauptbremszylinder (3) sowie dem Reservoir (4) und der Blockierschutzeinrichtung (11) zu dieser Kombination hin je Bremskreis (I, II) wenigstens ein druckgesteuertes 2/2-Wegeventil (77, 119) und mit der Blockierschutzeinrichtung (11) verbunden einen Zylinder (37, 38, 100) mit Trennkolben (66, 106), der einen Sekundärrraum (68, 105) von einem Primärraum (67, 104) trennt, und eine Trennkolbenrückstellfeder (69, 106a) und für beide Bremskreise (I, II) eine gemeinsame Hilfspumpe (49) mit Ventilmitteln (51, 52) aufweist, wobei die Hilfspumpe (49) im automatischen Bremsbetrieb Druck liefert in die Primärräume (67, 104) zum Verschieben der Trennkolben (66, 106) und zum Schließen der druckgesteuerten 2/2-Wegeventile (77, 119), und mit einem Steuergerat (30) zum Steuern der Blockierschutzeinrichtung (11) zum Vermeiden von Radblockiergefahr und der zusätzlichen Einrichtung (12) zum automatischen Bremsen wie zur Verbesserung des Fahrverhaltens des Fahrzeugs und/oder zur Antriebsschlupfregelung an angetriebenen Rädern, dadurch gekennzeichnet, daß die Hilfspumpe (49) einen Druck liefert, der wesentlich unterhalb dem Vollbremsdruck, der mittels des Hauptbremszylinders (3) erzeugbar ist, liegt, daß der jeweilige Sekundärraum (68, 105) über ein elektrisch steuerbares 2/2-Wegeventil (45, 46) direkt mit einem jeweiligen Eingang (89, 90) einer der Rückförderpumpen (13, 14) verbunden ist, und daß zwischen einem Ausgang dieser Rückförderpumpe (13, 14) und dem Sekundärraum (69, 105) eine Kombination aus einem Umschaltventil (39, 40) und einem zum Sekundärraum (68, 105) hin öffenbaren Druckbegrenzungsventil (41, 42) angeordnet ist.

2. Hydraulische Fahrzeugbremsanlage nach Anspruch 1, dadurch gekennzeichnet, daß das Ventilmittel aus einem einem Ausgang (55) der Hilfspumpe (49) zugeordneten Hilfsdruckbegrenzungsventil (51) besteht, das bei einem wesentlich unterhalb des Vollbremsdruckes liegenden Hilfsdruck öffnet.

3. Hydraulische Fahrzeugbremsanlage nach Anspruch 1 oder 2, dadurch gekennzeichnet, daß der Ausgang (55) der Hilfspumpe (49) mit deren Eingang (53) durch wenigstens einen Drosselquerschnitt (52) verbunden ist.

4. Hydraulische Fahrzeugbremsanlage nach Anspruch 1 oder 2, dadurch gekennzeichnet, daß das Ventilmittel aus einer Drossel (52) besteht, durch die hindurch der Ausgang (55) der Hilfspumpe (49) mit deren Eingang (53) verbunden ist.

5. Hydraulische Fahrzeugbremsanlage nach einem der Ansprüche 1 bis 4, dadurch gekennzeichnet, daß das druckgesteuerte 2/2-Wegeventil (77, 119) in dem Zylinder (37, 38, 100, 101) untergebracht ist, und daß der Trennkolben (66, 106) einen Steuerkolben bildet für das druckgesteuerte 2/2-Wegeventil (77, 119), das einen Ventilsitz (79, 120) und einen Schließkörper (82, 124) besitzt.

6. Hydraulische Fahrzeugbremsanlage nach einem der Ansprüche 1 bis 5, dadurch gekennzeichnet, daß der Trennkolben (106) an einem zum Primärraum (104) gerichteten Anfang einen ersten Kolbendichtring (110) und an einem zum Sekundärraum (105) gerichteten Ende einen zweiten Kolbendichtring (111) aufweist, und daß in einem Bereich zwischen den beiden Kolbendichtringen (110, 111) der Trennkolben (106) eine Einschnürung (112) aufweist, daß die Einschnürung (112) in Längsrichtung des Trennkolbens (106) eine Abmessung aufweist, die wenigstens so lang ist wie der vorgesehene längstmögliche Hub des Trennkolbens (106), und daß der Zylinder (100, 101) der Einschnürung (112) zugeordnet eine Entlastungsöffnung (113) aufweist, die in allen möglichen Stellungen des Trennkolbens (106) mit dessen Einschnürung (112) kommuniziert.

7. Hydraulische Fahrzeugbremsanlage nach Anspruch 6 dadurch gekennzeichnet, daß die Entlastungsöffnung (113) über eine bei eingebauten Zustand der Bremsanlage nach oben steigende Leitung (130) mit einem Reservoir (4) verbunden ist.

8. Hydraulische Fahrzeugbremsanlage nach einem der Ansprüche 1 bis 5, dadurch gekennzeichnet, daß angrenzend an den Sekundärraum (68) der Trennkolben (66) eine Ventilkammer (78) mit einem Ventilsitz (79) aufweist, daß von dem Ventilsitz (79) ausgehend ein Verbindungskanal (80, 81) zu einer am Trennkolben (66) zwischen zwei Kolbendichtringen (70,71) angeordneten Einschnürung (72) führt, die mit einem hauptbremszylinderseitigen Anschluß (62) kommuniziert, daß das Schließelement (82), das von einer Schließfeder (88) belastet ist, in der Ventilkammer (78) relativ zu dem Trennkolben (66) verschiebbar ist, daß das Schließelement (82) mit einem Ventilschaft (83) verbunden ist, daß der Ventilschaft (83) gegenüberliegend zu dem Schließelement (82) einen Bund (84) aufweist, der einen ruhenden Axialanschlag (75) hintergreift, derart, daß bei dem in seiner Grundstellung befindlichen Trennkolben (66) der Axialanschlag (75) sowie der Bund (84) aneinanderliegen und der Ventilschaft (83) das Schließelement (82) in einem Abstand vom Ventilsitz (79) hält.

9. Hydraulische Fahrzeugbremsanlage nach Anspruch 8, dadurch gekennzeichnet, daß der zwischen der Einschnürung (72) und dem Sekundärraum (68) befindliche Kolbendichtring (71) als Lippendichtring ausgebildet ist, der von der Einschnürung (72) aus zum Sekundärraum (68) hin umströmbar ist.

10. Hydraulische Fahrzeugbremsanlage nach einem der Ansprüche 1 bis 5, dadurch gekennzeichnet, daß an den Sekundärraum (105) angrenzend ein Schwimmkolben (107) mit zwei in einem Abstand angeordneten Schwimmkolbendichtringen (115, 116) verschiebbar angeordnet ist, der von dem Sekundärrraum (105) einen zum Hauptbremszylinder (3) hin gelegenen Beaufschlagungsraum (108) abtrennt, daß eine Schwimmkolbenrückstellfeder (129) im Sinne einer Verkleinerung des Betätigungsraum (108) auf den Schwimmkolben (107) einwirkt, daß der Betätigungsraum (108) mit dem Hauptbremszylinder (3) kommuniziert zur Erzeugung von Bremsdruck im Sekundärraum (105), daß zwischen den Kolbendichtringen (115, 116) der Schwimmkolben (107) eine Einschnürung (117) besitzt, die über eine Versorgungsöffnung (118) am Umfang des Zylinders (100, 101) mit einem Reservoir (4) für Druckmittel kommuniziert, und daß das druckgesteuerte 2/2-Wegeventil (119) in der Längsachse des Schwimmkolbens (107) in diesem angeordnet ist, wobei der Ventilsitz (120) relativ zu dem Schwimmkolben (107) starr angeordnet ist, ein Verbindungskanal (122, 123) zwischen dem Ventilsitz (120) und der Einschnürung (117) verläuft und die über einen Ventilschaft (125) auf das Schließelement (124) wirkende Schließfeder (128) innerhalb einer im Trennkolben (106) befindlichen Federkammer (114) gefesselt ist.

11. Hydraulische Fahrzeugbremsanlage nach einem der Ansprüche 1 bis 10, dadurch gekennzeichnet, daß für den automatischen Bremsbetrieb das Steuergerät (30) derart eingerichtet ist, daß es wenigstens ein zwischen der zusätzlichen Einrichtung (12) und dem jeweiligen Eingang (89, 90) der Rückförderpumpe (13, 14) befindliches elektrisch gesteuertes 2/2-Wegeventil (45, 46) nur anläßlich notwendiger automatischer Bremsdrucksteigerungen öffnet.

12. Hydraulische Fahrzeugbremsanlage nach einem der Ansprüche 1 bis 11, dadurch gekennzeichnet, daß für den automatischen Bremsbetrieb das Steuergerät (30) derart eingerichtet ist, daß es die Hilfspumpe (49) nur während solcher Zeitspannen einschaltet, in denen wenigstens in einem Bremskreis eine automatische Bremsdruckerhöhung nötig ist.

## Claims

1. Vehicle hydraulic brake system having a two-circuit main brake cylinder (3), having a reservoir (4) for the main brake cylinder (3), having two brake circuits (I, II) which are suitable for connection with wheel brakes (7, 8, 9, 10) of a motor vehicle, having, associated with the brake circuits (I, II), an anti-lock protection device (11) which has brake pressure modulation valve arrangements (15, 16, 17, 18) and, per brake circuit (I, II), a feed-back pump (13, 14) and having an additional device (12) for automatic braking in association with the anti-lock protection device (11), this additional device (12) having, between the combination of the main brake cylinder (3) and the reservoir (4), on the one hand, and the anti-lock protection device (II) for this combination, on the other, at least one pressure-controlled 2/2-way valve (77, 119) per brake circuit (I, II) and, connected to the anti-lock protection device (11), a cylinder (37, 38, 100) with separating piston (66, 106), which separates a secondary space (68, 105) from a primary space (67, 104), and a separating piston return spring (69, 106a) and a common auxiliary pump (49) with valve means (51, 52) for both brake circuits (I, II), the auxiliary pump (49) supplying pressure into the primary spaces (67, 104) in automatic braking operation to displace the separating pistons (66, 106) and to close the pressure-controlled 2/2-way valves (77, 119), and having a control unit (30) for controlling the anti-lock protection device (11) in order to avoid the danger of wheel lock and to control the additional device (12) for automatic braking and to improve the driving behaviour of the vehicle and/or for drive-slip control at driven wheels, characterized in that the auxiliary pump (49) supplies a pressure which is substantially below the full braking pressure which can be generated by means of the main brake cylinder (3), in that the respective secondary space (68, 105) is directly connected to a respective inlet (89, 90) of one of the feed-back pumps (13, 14) by means of an electrically controllable 2/2-way valve (45, 46), and in that a combination of a switch-over valve (39, 40) and a pressure limiting valve (41, 42) open towards the secondary space (68, 105) is arranged between an outlet of this feed-back pump (13, 14) and the secondary space (68, 105).

2. Vehicle hydraulic brake system according to Claim 1, characterized in that the valve means consists of an auxiliary pressure limiting valve (51) associated with an outlet (55) of the auxiliary pump (49), which auxiliary pressure limiting valve (51) opens at an auxiliary pressure substantially below the full braking pressure.

3. Vehicle hydraulic brake system according to Claim 1 or 2, characterized in that the outlet (55) of the auxiliary pump (49) is connected to its inlet (53) by means of at least one throttle cross-section (52).

4. Vehicle hydraulic brake system according to Claim 1 or 2, characterized in that the valve means consists of a throttle (52) through which the outlet (55) of the auxiliary pump (49) is connected to its inlet (53).

5. Vehicle hydraulic brake system according to one of Claims 1 to 4, characterized in that the pressure-controlled 2/2-way valve (77, 119) is accommodated in the cylinder (37, 38, 100, 101), and in that the separating piston (66, 106) forms a control piston for the pressure-controlled 2/2-way valve (77, 119), which has a valve seat (79, 120) and a closing body (82, 124).

6. Vehicle hydraulic brake system according to one of Claims 1 to 5, characterized in that the separating piston (106) has, at a beginning directed towards the primary space (104), a first piston sealing ring (110) and, at an end directed towards the secondary space (105), a second piston sealing ring (111), and in that the separating piston (106) has a neck (112) in a region between the two piston sealing rings (110, 111), in that the neck (112) has a dimension in the longitudinal direction of the separating piston (106) which is at least as long as the longest possible stroke envisaged for the separating piston (106), and in that the cylinder (100, 101) has a relief opening (113) associated with the neck (112), which relief opening (113) communicates with the neck (112) of the separating piston (106) in all possible positions of the latter.

7. Vehicle hydraulic brake system according to Claim 6, characterized in that the relief opening (113) is connected to a reservoir (4) via a conduit (130) which rises upwards when the brake system has been installed.

8. Vehicle hydraulic brake system according to one of Claims 1 to 5, characterized in that the separating piston (66) has a valve chamber (78) with a valve seat (79) adjacent to the secondary space (68), in that starting from the valve seat (79) a connection passage (80, 81) leads to a neck (72) arranged on the separating piston (66) between two piston sealing rings (70, 71), which neck (72) communicates with a connection (62) at the main brake cylinder end, in that the closing element (82), which is loaded by a closing spring (88), can be displaced in the valve chamber (78) relative to the separating piston (66), in that the closing element (82) is connected to a valve stem (83), in that the valve stem (83) has a collar (84) opposite to the closing element (82), which collar (84) engages behind a stationary axial stop (75) in such a way that when the separating piston (66) is in its basic position, the axial stop (75) and the collar (84) are in contact with one another and the valve stem (83) holds the closing element (82) at a distance from the valve seat (79).

9. Vehicle hydraulic brake system according to Claim 8, characterized in that the piston sealing ring (71) located between the neck (72) and the secondary space (68) is configured as a lip sealing ring around which flow can occur towards the secondary space (68) from the neck (72).

10. Vehicle hydraulic brake system according to one of Claims 1 to 5, characterized in that a floating piston (107), which is adjacent to the secondary space (105) and has two floating piston sealing rings (115, 116) arranged at a distance apart, is arranged so that it can be displaced, which floating piston (107) separates an actuation space (108) located towards the main brake cylinder (3) from the secondary space (105), in that a floating piston return spring (129) acts on the floating piston (107) in the sense of reducing the actuation space (108), in that the actuation space (108) communicates with the main brake cylinder (3) to generate brake pressure in the secondary space (105), in that the floating piston (107) has a neck (117) between the piston sealing rings (115, 116), which neck (117) communicates with a reservoir (4) for pressure medium via a supply opening (118) on the periphery of the cylinder (100, 101), and in that the pressure-controlled 2/2-way valve (119) is arranged in the floating piston (107) in its longitudinal axis, the valve seat (120) being rigidly arranged relative to the floating piston (107), a connecting passage (122, 123) extending between the valve seat (120) and the neck (117) and the closing spring (128) acting on the closing element (124) by means of a valve stem (125) being bound within a spring chamber (114) located in the separating piston (106).

11. Vehicle hydraulic brake system according to one of Claims 1 to 10, characterized in that for automatic braking operation, the control unit (30) is arranged in such a way that it opens at least one electrically-controlled 2/2-way valve (45, 46) located between the additional device (12) and the respective inlet (89, 90) of the feed-back pump (13, 14) only when automatic brake pressure increases are necessary.

12. Vehicle hydraulic brake system according to one of Claims 1 to 11, characterized in that for automatic braking operation, the control unit (30) is arranged in such a way that it only switches on the auxiliary pump (49) during intervals in which an automatic increase in brake pressure is necessary in at least one brake circuit.

## Revendications

1. Installation de frein hydraulique de véhicule comprenant un maître-cylindre de frein (3) à deux circuits, un réservoir (4) pour le maître-cylindre de frein (3), deux circuits de freins (I, II) assurant le branchement des freins de roues (7, 8, 9, 10) d'un véhicule automobile, des dispositifs à soupapes de modulation de pression de frein (15, 16, 17, 18) et une pompe de refoulement (13, 14) pour chaque circuit de frein (I, II), ainsi qu'une installation supplémentaire (12) pour freiner automatiquement en combinaison avec l'installation antiblocage (11), cette installation supplémentaire (12) entre la combinaison formée par le maître-cylindre de frein (3) et son réservoir (4) ainsi que l'installation antiblocage (11) vers cette combinaison, séparant chaque fois un circuit de frein (I, II) d'au moins un distributeur à 2/2 voies (77, 119) commandé en pression et de l'installation antiblocage (11), reliée à un cylindre (37, 38, 100), avec un piston séparateur (66, 106), qui sépare une chambre secondaire (68, 105) d'une chambre primaire (67, 104) et un ressort de rappel de piston (69, 106a) et pour les deux circuits de freins (I, II), une pompe auxiliaire (49) commune, avec des moyens formant soupapes (51, 52), la pompe auxiliaire (49) fournissant de la pression, en mode de frein automatique, aux chambres primaires (67, 104) pour déplacer le piston séparateur (66, 106) et pour fermer les distributeurs à 2/2 voies (77, 119) commandés en pression, ainsi qu'un appareil de commande (30) pour commander l'installation antiblocage (11), pour éviter le risque de blocage de roues, et l'installation supplémentaire (12) pour freiner automatiquement ainsi que pour améliorer la tenue de route du véhicule et/ou la régulation au patinage des roues motrices, caractérisée en ce que la pompe auxiliaire (49) fournit une pression très inférieure à la pression maximale de frein, susceptible d'être créée par le maître-cylindre de frein (3), de façon que la chambre secondaire respective (68, 105) soit reliée directement, par un distributeur à 2/2 voies (45, 46) à commande électrique, à une entrée respective (89, 90) de l'une des pompes de refoulement (13, 14), et en ce qu'entre une sortie de cette pompe de refoulement (13, 14) et la chambre secondaire (69, 105), on a une combinaison formée d'une soupape de commutation (39, 40) et d'une soupape de limitation de pression (41, 42) s'ouvrant en direction de la chambre secondaire (68, 105).

2. Installation de frein hydraulique de véhicule selon la revendication 1, caractérisée en ce que le moyen à soupapes se compose d'une soupape de limitation auxiliaire de pression (51) associée à une sortie (55) de la pompe auxiliaire (49), cette soupape auxiliaire s'ouvrant sous l'effet d'une pression auxiliaire très inférieure à la pression maximale de frein.

3. Installation de frein hydraulique de véhicule selon la revendication 1 ou 2, caractérisée en ce que la sortie (55) de la pompe auxiliaire (49) est reliée à l'entrée (53) par au moins une section d'étranglement (52).

4. Installation de frein hydraulique de véhicule selon la revendication 1 ou 2, caractérisée en ce que le moyen à soupapes se compose d'un organe d'étranglement (52) reliant la sortie (55) de la pompe auxiliaire (49) à son entrée (53).

5. Installation de frein hydraulique de véhicule selon l'une des revendications 1 à 4, caractérisée en ce que les distributeurs à 2/2 voies (77, 119) commandés en pression sont logés dans le cylindre (37, 38 ; 100, 101) et en ce que le piston séparateur (66, 106) forme un piston de commande pour le distributeur à 2/2 voies (77, 119) commandé en pression, comportant un siège de soupape (79, 120) et un organe d'obturation (82, 124).

6. Installation de frein hydraulique de véhicule selon les revendications 1 ou 5, caractérisée en ce que le piston séparateur (106) comprend un premier joint d'étanchéité (110) dirigé par son début vers la chambre primaire (104) et un second joint d'étanchéité (111) dont l'extrémité tournée vers la chambre secondaire (105), en ce que, dans une zone comprise entre les deux joints d'étanchéité de piston (110, 111), le piston séparateur (106) comporte une partie en retrait (112) ayant, dans la dimension longitudinale du piston séparateur (106), une longueur au moins égale à la plus grande course longitudinale possible prévue du piston séparateur (106), et en ce que le cylindre (100, 101) comporte un orifice de décharge (113) associé à la partie dégagée (112), cet orifice communiquant avec cette partie dégagée (112) quelle que soit la position possible du piston séparateur (106).

7. Installation de frein hydraulique de véhicule selon la revendication 6, caractérisée en ce que l'orifice de décharge (113) est relié à un réservoir (4) par une conduite (130) qui, lorsque l'installation de frein est montée, est dirigé vers le haut.

8. Installation de frein hydraulique de véhicule selon l'une des revendications 1 ou 5, caractérisée en ce que, de manière adjacente à la chambre secondaire (68), le piston séparateur (66) comporte une chambre de soupape (78) avec un siège de soupape (79) et, partant de ce siège de soupape (79), un canal de liaison (80, 81) est relié à une partie en retrait (72) prévue sur le piston séparateur (66) entre les deux joints d'étanchéité (70, 71) du piston, cette partie en retrait communiquant avec l'ajutage (62) du côté du maître-cylindre de frein, l'élément d'obturation (82) chargé par un ressort d'obturation (88) étant coulissant dans la chambre à soupapes (78) par rapport au piston séparateur (66), l'élément d'obturation (82) étant relié à une tige de soupape (83) comportant une collerette (84) du côté opposé à l'élément d'obturation (82), cette collerette venant prendre derrière une butée axiale fixe (75) de façon que lorsque le piston séparateur (66) occupe sa position de base, la butée axiale (75) et la collerette (84) sont appliquées l'une contre l'autre et la tige de soupape (83) maintient l'élément d'obturation (82) à distance du siège de soupape (79).

9. Installation de frein hydraulique de véhicule selon la revendication 8, caractérisée en ce que le joint de piston (71) situé entre la partie dégagée (72) et la chambre secondaire (68) est réalisé en forme de joint à lèvres qui peut être balayé en partant de la partie dégagée (72) vers la chambre secondaire (68).

10. Installation de frein hydraulique de véhicule selon l'une des revendications 1 ou 5, caractérisée en ce que, de manière adjacente à la chambre secondaire (105), un piston flottant (107) est monté coulissant avec deux joints d'étanchéité de piston flottant (115, 116) distants l'un de l'autre, ce piston séparant la chambre secondaire (105) d'une chambre de sollicitation (108) située du côté du maître-cylindre de frein 3, un ressort de rappel de piston flottant (129) agissant sur le piston flottant (107) dans le sens d'une réduction de la chambre de manoeuvre (108) et cette chambre (108) communiquant avec le maître-cylindre de frein (3) pour créer la pression de frein dans la chambre secondaire (105), entre les joints de pistons (115, 116) du piston flottant (107) il est prévu un dégagement (117) communiquant, par un orifice d'alimentation (118) prévu à la périphérie du cylindre (101), avec un réservoir (4) de fluide sous pression, et le distributeur à 2/2 voies (119) commandé en pression est prévu dans le piston flottant (107) suivant son axe longitudinal, le siège de soupape (120) étant monté rigidement par rapport au piston flottant (107), un canal de liaison (122, 123) passant entre le siège de soupape (120) et la partie dégagée (117), et le ressort d'obturation (128) agissant sur l'élément d'obturation (124) par une tige de soupape (125), étant emprisonné dans une chambre à ressort (114) à l'intérieur du piston séparateur (106).

11. Installation de frein hydraulique de véhicule selon l'une des revendications 1 à 10, caractérisée en ce que pour le mode de freinage automatique, l'appareil de commande (30) est conçu pour qu'un distributeur à 2/2 voies (45, 45) prévu entre l'installation supplémentaire (12) et l'entrée respective (89, 90) de la pompe de refoulement (13, 14), distributeur à commande électrique, ne s'ouvre que pour des montées de pression de frein, automatiques, nécessaires.

12. Installation de frein hydraulique de véhicule selon l'une des revendications 1 ou 11, caractérisée en ce que, pour le mode de freinage automatique, l'appareil de commande (30) est conçu pour que la pompe auxiliaire (49) ne se mette en route que dans les intervalles au cours desquels, dans au moins un circuit de frein, il faut une augmentation automatique de la pression de frein.
